# EUROPEAN PATENT APPLICATION

(11) **EP 4 648 542 A1**
(43) Date of publication of application: **12.11.2025**
(21) Application number: 25711403.3
(22) Date of filing: 13.03.2025
(51) Int. Cl.: H04W 76/25, H04W 76/12, H04W 40/24, H04W 76/22, H04W 40/22, H04W 76/32, H04W 40/36, H04W 36/14, H04W 36/00

(54) **ELECTRONIC DEVICE USING NETWORK SLICE, METHOD FOR OPERATING SAME, AND STORAGE MEDIUM**

(30) Priority: 27.03.2024 KR 20240041593; 27.06.2024 KR 20240084657
(71) Applicant: SAMSUNG ELECTRONICS CO., LTD., Yeongtong-gu Suwon-si, Gyeonggi-do 16677 (KR)
(72) Inventor: SONG, Injae., Suwon-si Gyeonggi-do 16677 (KR); KIM, Dongho., Suwon-si Gyeonggi-do 16677 (KR); LEE, Soomin., Suwon-si Gyeonggi-do 16677 (KR); LEE, Kyunghoon., Suwon-si Gyeonggi-do 16677 (KR)
(74) Representative: HGF
(86) International application number: PCT/KR2025/099798
(87) International publication number: WO 2025/206937

(57) **Abstract**

According to an embodiment, an electronic device may include at least one processor. The electronic device may include memory which stores instructions. The instructions, when executed by the at least one processor individually or collectively, may cause the electronic device to perform at least one operation for establishing a first protocol data unit (PDU) session, based on information for establishing a PDU session which is pre-stored in the electronic device. The instructions, when executed by the at least one processor individually or collectively, may cause the electronic device to identify occurrence of an event associated with application of a user equipment route selection policy (URSP) rule. The instructions, when executed by the at least one processor individually or collectively, may cause the electronic device to, based on identifying the occurrence of the event, identify whether to maintain or release the first PDU session based on a comparison result between the URSP rule and a plurality of pieces of information for the first PDU session. The instructions, when executed by the at least one processor individually or collectively, may cause the electronic device to, based on identifying to release the first PDU session, perform at least one operation for releasing the first PDU session, and perform, based on the release of the first PDU session, at least one operation for establishing a second PDU session based on at least part of the URSP rule. Another embodiment is possible.

## Description

### [Technical Field]

The disclosure relates to an electronic device using a network slice, and an operating method and a storage medium thereof.

### [Background Art]

In order to meet the demand for wireless data traffic, which has soared since a 4G communication system came to the market, there are ongoing efforts to develop enhanced 5G communication systems or pre-5G communication systems. The 5G communication system or pre-5G communication system is called the beyond 4G network communication system or post LTE system. For higher data transmit rates, 5G communication systems are considered to be implemented on ultra-high frequency bands (mmWave) (such as, e.g., 60 GHz). To mitigate path loss on the ultra-high frequency band and increase the reach of radio waves, a beamforming technology, a massive multi-input multi-output (MIMO) technology, a full dimensional MIMO (FD-MIMO) technology, an array antenna technology, an analog beamforming technology, and a large scale antenna technology, are taken into account for the 5G communication system.

One of the most notable new architectural features of a 5G network is the introduction of a network slicing technology to a radio access network (RAN) structure and a core network (CN) structure. This is intended to apply properties such as isolation, customization, and independent management and orchestration of a network system function and a resource to a mobile communication network structure by bundling a network resource and network functions into an independent network slice according to individual services. Using this network slicing technology, it becomes possible to provide an independent and flexible 5G service by selecting and combining network functions of a 5G system according to a criterion of a service, a user, and a business model.

In a 3rd generation partnership project (3GPP), a UE route selection policy (URSP) rule is defined. A user equipment (UE) may receive a URSP rule from a policy control function (PCF) to establish a data session with a network slice. The URSP rule may include a traffic descriptor and a route selection descriptor.

The information described above may be provided as a related art for the purpose of assisting in understanding the disclosure. No claim or determination is made as to whether any of the above is applicable as a prior art related to the disclosure.

### [Detailed Description of the Invention]

### [Technical Problem]

When a UE receives a URSP rule from a PCF, it may establish a protocol data unit (PDU) session according to the URSP rule. While the UE is communicating with a network according to the established PDU session, the Network may make use of a Manage UE Policy command to transmit a new URSP rule. In response, the UE will release the current PDU session by transmitting a PDU session release request and receiving a PDU session release acceptance. The UE will then establish a new PDU session with the network according to the new URSP rule.

As a result, when a URSP rule is updated a current PDU session is released and a new PDU session is established. However, this creates an interruption in service, which can result service disconnection issues for the UE. For example, a service on the UE may temporarily halt, and the user may notice issues such as delays in response or icon flickering, caused by the interruption in service.

### [Technical Solution]

An electronic device may include at least one processor.

The electronic device may include memory which stores instructions.

The instructions, when executed by the at least one processor individually or collectively, may cause the electronic device to perform at least one operation for establishing a first protocol data unit (PDU) session, based on information for establishing a PDU session which is pre-stored in the electronic device.

The instructions, when executed by the at least one processor individually or collectively, may cause the electronic device to identify occurrence of an event associated with application of a URSP rule.

The instructions, when executed by the at least one processor individually or collectively, may cause the electronic device to, based on identifying the occurrence of the event, identify whether to maintain or release the first PDU session based on a comparison result between the URSP rule and a plurality of pieces of information for the first PDU session.

The instructions, when executed by the at least one processor individually or collectively, may cause the electronic device to, based on identifying to release the first PDU session, perform at least one operation for releasing the first PDU session, and perform, based on the release of the first PDU session, at least one operation for establishing a second PDU session based on at least part of the URSP rule.

An operating method of an electronic device may include performing at least one operation for establishing a first protocol data unit (PDU) session, based on information for establishing a PDU session which is pre-stored in the electronic device.

The operating method of the electronic device may include identifying occurrence of an event associated with application of a URSP rule.

The operating method of the electronic device may include, based on identifying the occurrence of the event, identifying whether to maintain or release the first PDU session based on a comparison result between the URSP rule and a plurality of pieces of information for the first PDU session.

The operating method of the electronic device may include, based on identifying to release the first PDU session, performing at least one operation for releasing the first PDU session, and performing, based on the release of the first PDU session, at least one operation for establishing a second PDU session based on at least part of the URSP rule.

A storage medium storing computer-readable instructions may be provided.

The instructions, when executed by at least one processor individually or collectively, cause an electronic device to, based on information for establishing a protocol data unit (PDU) session which is pre-stored in the electronic device, perform at least one operation for establishing a first PDU session.

The instructions, when executed by at least one processor individually or collectively, cause the electronic device to identify occurrence of an event associated with application of a URSP rule.

The instructions, when executed by at least one processor individually or collectively, cause the electronic device to, based on identifying the occurrence of the event, identify whether to maintain or release the first PDU session based on a comparison result between the URSP rule and a plurality of pieces of information for the first PDU session.

The instructions, when executed by at least one processor individually or collectively, cause the electronic device to, based on identifying to release the first PDU session, perform at least one operation for releasing the first PDU session, and perform, based on the release of the first PDU session, at least one operation for establishing a second PDU session based on at least part of the URSP rule.

An electronic device may include at least one processor.

The electronic device may include memory which stores instructions.

The instructions, when executed by the at least one processor individually or collectively, may cause the electronic device to, based on information for establishing a protocol data unit (PDU) session which is pre-stored in the electronic device, perform at least one operation for establishing a first PDU session.

The instructions, when executed by the at least one processor individually or collectively, may cause the electronic device to identify occurrence of an event associated with application of a URSP rule.

The instructions, when executed by the at least one processor individually or collectively, may cause the electronic device to, based on identifying the occurrence of the event, identify whether to adjust the first PDU session based on a comparison result between the URSP rule and a plurality of pieces of information for the first PDU session.

The instructions, when executed by the at least one processor individually or collectively, may cause the electronic device to, based on identifying to adjust the first PDU session, perform, based on at least part of the URSP rule, at least one operation for adjusting the first PDU session.

An operating method of an electronic device may include performing at least one operation for establishing a first protocol data unit (PDU) session, based on information for establishing a PDU session which is pre-stored in the electronic device.

The operating method of the electronic device may include identifying occurrence of an event associated with application of a URSP rule.

The operating method of the electronic device may include, based on identifying the occurrence of the event, identify whether to adjust the first PDU session based on a comparison result between the URSP rule and a plurality of pieces of information for the first PDU session.

The operating method of the electronic device may include, based on identifying to adjust the first PDU session, perform, based on at least part of the URSP rule, at least one operation for adjusting the first PDU session.

A storage medium storing computer-readable instructions may be provided.

The instructions, when executed by the at least one processor individually or collectively, may cause the electronic device to perform at least one operation for establishing a first protocol data unit (PDU) session, based on information for establishing a PDU session which is pre-stored in the electronic device.

The instructions, when executed by the at least one processor individually or collectively, may cause the electronic device to identify occurrence of an event associated with application of a URSP rule.

The instructions, when executed by the at least one processor individually or collectively, may cause the electronic device to, based on identifying the occurrence of the event, identify whether to adjust the first PDU session based on a comparison result between the URSP rule and a plurality of pieces of information for the first PDU session.

The instructions, when executed by the at least one processor individually or collectively, may cause the electronic device to, based on identifying to adjust the first PDU session, perform, based on at least part of the URSP rule, at least one operation for adjusting the first PDU session.

### [Description of the Drawings]

FIG. 1 is a block diagram illustrating an electronic device in a network environment according to various embodiments.
FIG. 2a is a block diagram illustrating an electronic device for supporting a legacy network communication and a 5G network communication according to various embodiments.
FIG. 2b is a block diagram illustrating an electronic device for supporting a legacy network communication and a 5G network communication according to various embodiments.
FIG. 3a illustrates a 5G system architecture.
FIG. 3b illustrates a 5G network slice structure.
FIG. 4 is a diagram for explaining an operating method of an electronic device and a network according to an embodiment.
FIG. 5 is a diagram for explaining an operating method of an electronic device and a network according to a comparative example for comparison with an embodiment.
FIG. 6a is a diagram for explaining an operating method of an electronic device according to an embodiment.
FIG. 6b is a drawing for explaining an operating method of an electronic device according to an embodiment.
FIG. 6c is a drawing for explaining an operating method of an electronic device according to an embodiment.
FIG. 7 is a diagram for explaining an operating method of an electronic device and a network according to an embodiment.
FIG. 8 is a flowchart for explaining an operating method of an electronic device according to an embodiment.
FIG. 9 is a drawing for explaining an operating method of an electronic device according to an embodiment.
FIG. 10 is a drawing for explaining an operating method of an electronic device according to an embodiment.
FIG. 11a is a drawing for explaining an operating method of an electronic device according to an embodiment.
FIG. 11b is a diagram for explaining an operating method of an electronic device and a network according to an embodiment.
FIG. 12a is a drawing for explaining an operating method of an electronic device according to an embodiment.
FIG. 12b is a diagram for explaining an operating method of an electronic device and a network according to an embodiment.
FIG. 13 is a drawing for explaining an operating method of an electronic device according to an embodiment.

### [Mode for Invention]

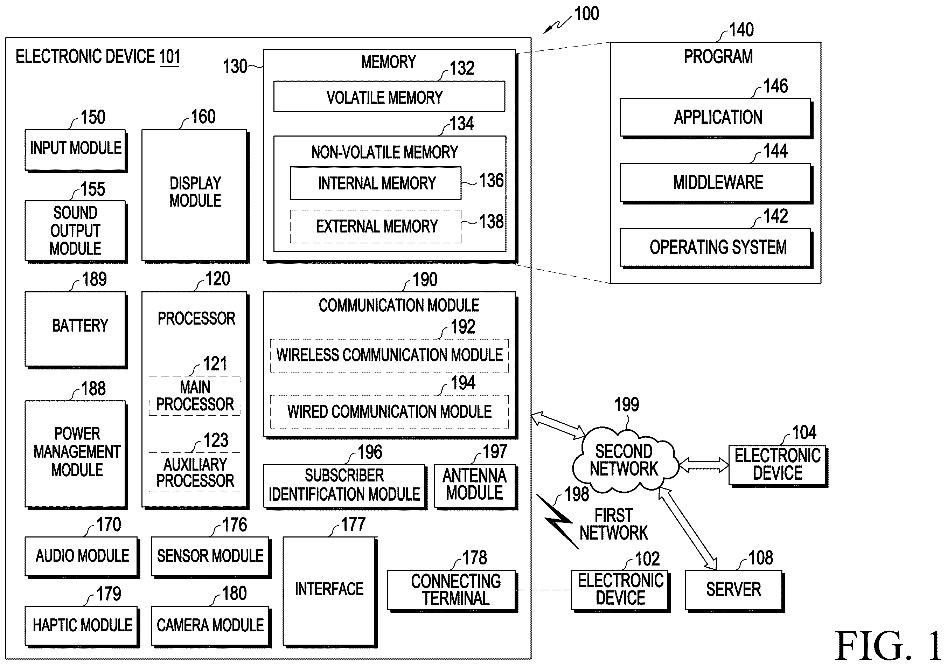

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

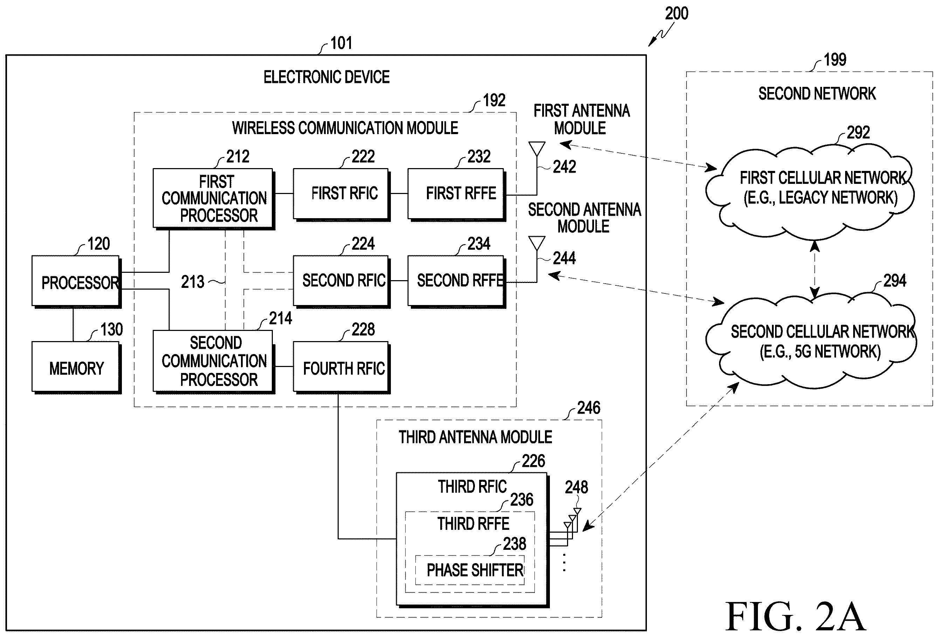

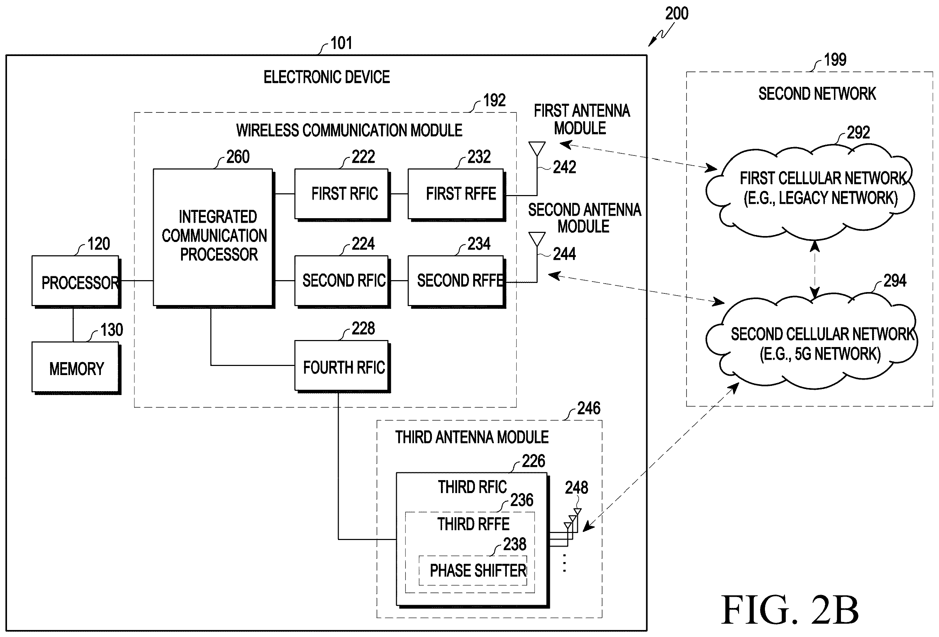

FIG. 2a is a block diagram 200 illustrating an electronic device 101 for supporting a legacy network communication and a 5G network communication according to an embodiment. The electronic device 101 of FIG. 2a may be an electronic device 101 of FIG. 1. The electronic device 101 of FIG. 2b may be an electronic device 101 of FIG. 1.

Referring to FIG. 2a, an electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 244, and antennas 248. The electronic device 101 may further include a processor 120 and memory 130. A second network 199 may include a first cellular network 292 and a second cellular network 294. According to another embodiment, the electronic device 101 may further include at least one of the components illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of a wireless communication module 192. According to another embodiment, the fourth RFIC 228 may be omitted or included as part of the third RFIC 226.

The first communication processor 212 may establish a communication channel in a band to be used for a wireless communication with the first cellular network 292 and support a legacy network communication via the established communication channel. According to an embodiment, the first cellular network 292 may be a legacy network including a 2^{nd} generation (2G) network, a 3G network, a 4G network, or a long term evolution (LTE) network. The second communication processor 214 may establish a communication channel corresponding to a specified band (e.g., about 6GHz to about 60GHz) out of a band to be used for a wireless communication with the second cellular network 294 and support a 5G network communication via the established communication channel. According to an embodiment, the second cellular network 294 may be a 5G network defined by the 3GPP. Additionally, according to an embodiment, the first communication processor 212 or the second communication processor 214 may establish a communication channel corresponding to another specified band (e.g., about 6GHz or less) out of the band to be used for the wireless communication with the second cellular network 294 and support a 5G network communication via the established communication channel.

The first communication processor 212 may transmit and receive data to and from the second communication processor 214. For example, data supposed to be transmitted via the second cellular network 294 may be scheduled to be transmitted via the first cellular network 292. In this case, the first communication processor 212 may receive transmission data from the second communication processor 214. For example, the first communication processor 212 may transmit and receive data to and from the second communication processor 214 via an inter-processor interface 213. The inter-processor interface 213 may be implemented as, for example, a universal asynchronous receiver/transmitter (UART) (e.g., high speed-UART (HS-UART)) or a peripheral component interconnect bus express (PCIe) interface, but a type thereof is not limited. Alternatively, the first communication processor 212 and the second communication processor 214 may exchange control information and packet data information by using, for example, a shared memory. The first communication processor 212 may transmit and receive various pieces of information such as sensing information, information about output strength, and resource block (RB) allocation information to and from the second communication processor 214.

According to implementation, the first communication processor 212 may not be coupled directly to the second communication processor 214. In this case, the first communication processor 212 may transmit and receive data to and from the second communication processor 214 via the processor 120 (e.g., an application processor). For example, the first communication processor 212 and the second communication processor 214 may transmit and receive data to and from the processor 120 (e.g., an application processor) via an HS-UART interface or a PCIe interface, but a type of an interface is not limited. Alternatively, the first communication processor 212 and the second communication processor 214 may exchange control information and packet data information by using, for example, the processor 120 (e.g., an application processor) and the shared memory.

According to an embodiment, the first communication processor 212 and the second communication processor 214 may be incorporated in a single chip or a single package. According to an embodiment, the first communication processor 212 or the second communication processor 214 may be incorporated together with the processor 120, an auxiliary processor 123, or a communication module 190 in a single chip or a single package. For example, as illustrated in FIG. 2b, an integrated communication processor 260 may support all of a function for a communication with the first cellular network 292 and with the second cellular network 294.

As described above, at least one of the processor 120, the first communication processor 212, the second communication processor 214, or the integrated communication processor 260 may be implemented as a single chip or a single package. In this case, the single chip or single package may include memory (or storage means) which stores an instruction which causes at least some of operations performed according to an embodiment, and a processing circuit (or, the name thereof is not limited, such as an arithmetic circuit) for executing the instruction.

For transmission, the first RFIC 222 may convert a signal generated by the first communication processor 212 to a radio frequency (RF) signal in about 700MHz to about 3GHz used in the first cellular network 292 (e.g., the legacy network). For reception, an RF signal may be obtained from the first cellular network 292 (e.g., the legacy network) via an antenna (e.g., the first antenna module 242) and pre-processed via an RFFE (e.g., the first RFFE 232). The first RFIC 222 may convert the pre-processed RF signal to a signal which may be processed by the first communication processor 212.

For transmission, the second RFIC 224 may convert a signal generated by the first communication processor 212 or the second communication processor 214 to an RF signal in a Sub6 band (e.g., about 6GHz or less) used in the second cellular network 294 (e.g., the 5G network). For reception, a 5G Sub6 RF signal may be obtained from the second cellular network 294 (e.g., the 5G network) via an antenna (e.g., the second antenna module 244) and pre-processed in an RFFE (e.g., the second RFFE 234). The second RFIC 224 may convert the pre-processed 5G Sub6 RF signal to a baseband signal which may be processed by a corresponding one between the first communication processor 212 and the second communication processor 214.

For transmission, the third RFIC 226 may convert a signal generated by the second communication processor 214 to an RF signal (hereinafter, referred to as, a 5G Above6 RF signal) in a 5G Above6 band (e.g., about 6GHz to about 60GHz) to be used in the second cellular network 294 (e.g., the 5G network). For reception, a 5G Above6 RF signal may be obtained from the second cellular network 294 (e.g., the 5G network) via an antenna (e.g., the antenna 248) and pre-processed via the third RFFE 236. The third RFIC 226 may convert the pre-processed 5G Above6 RF signal to a baseband signal which may be processed by the second communication processor 214. According to an embodiment, the third RFFE 236 may be formed as part of the third RFIC 226.

According to an embodiment, the electronic device 101 may include the fourth RFIC 228 separately from or as part of the third RFIC 226. In this case, the fourth RFIC 228 may convert a signal generated by the second communication processor 214 to an RF signal in an intermediate frequency band (e.g., about 9GHz to about 11GHz) (hereinafter, referred to as an intermediate frequency (IF) signal), and provide the IF signal to the third RFIC 226. The third RFIC 226 may convert the IF signal to a 5G Above6 RF signal. During reception, a 5G Above6 RF signal may be received from the second cellular network 294 (e.g., the 5G network) through an antenna (e.g., the antenna 248) and converted to an IF signal by the third RFIC 226. The fourth RFIC 228 may convert the IF signal to a baseband signal which may be processed by the second communication processor 214.

According to an embodiment, the first RFIC 222 and the second RFIC 224 may be implemented as at least part of a single chip or a single package. According to an embodiment, if the first RFIC 222 and the second RFIC 224 are implemented as a single chip or a single package in FIG. 2a or 2b, the first RFIC 222 and the second RFIC 224 may be implemented as an integrated RFIC. In this case, the integrated RFIC is connected to the first RFFE 232 and the second RFFE 234, so the integrated RFIC may convert a baseband signal into a signal of a band supported by the first RFFE 232 and/or the second RFFE 234, and transfer the converted signal to one of the first RFFE 232 and the second RFFE 234. According to an embodiment, the first RFFE 232 and the second RFFE 234 may be implemented as at least part of a single chip or a single package. According to an embodiment, at least one of the first antenna module 242 or the second antenna module 244 may be omitted or combined with the other antenna module to process RF signals in a plurality of corresponding bands.

According to an embodiment, the third RFIC 226 and the antenna 248 may be arranged on the same substrate to form a third antenna module 246. For example, the wireless communication module 192 or the processor 120 may be arranged on a first substrate (e.g., a main PCB). In this case, the third RFIC 226 may be arranged in a partial area (e.g., the bottom surface) of a second substrate (e.g., a sub PCB) other than the first substrate and the antenna 248 may be arranged in another partial area (e.g., the top surface) of the second substrate, to form the third antenna module 246. As the third RFIC 226 and the antenna 248 are arranged on the same substrate, it is possible to reduce length of a transmission line between the third RFIC 226 and the antenna 248. This may reduce, for example, loss (e.g., attenuation) of a signal in a high frequency band (e.g., about 6GHz to about 60GHz) used for a 5G network communication, on the transmission line. Therefore, the electronic device 101 may increase quality or a speed of a communication with the second cellular network 294 (e.g., the 5G network).

According to an embodiment, the antenna 248 may be formed as an antenna array including a plurality of antenna elements which may be used for beamforming. In this case, for example, the third RFIC 226 may include a plurality of phase shifters 238 corresponding to the plurality of antenna elements, as part of the third RFFE 236. During transmission, each of the plurality of phase shifters 238 may change a phase of a 5G Above6 RF signal to be transmitted to the outside of the electronic device 101 (e.g., a base station in the 5G network) via a corresponding antenna element. During reception, each of the phase shifters 238 may change a phase of a 5G Above6 RF signal received from the outside via a corresponding antenna element to the same or substantially same phase. This enables transmission or reception via beamforming between the electronic device 101 and the outside.

The second cellular network 294 (e.g., the 5G network) may be operated independently of the first cellular network 292 (e.g., the legacy network) (e.g., Stand-Alone (SA)) or in connection to the first cellular network 292 (e.g., Non-Stand Alone (NSA)). For example, in the 5G network, only an access network (e.g., a 5G radio access network (RAN) or next generation RAN (NG RAN)) may exist, and a core network (e.g., a next generation core (NGC)) may not exist. In this case, after accessing the access network of the 5G network, the electronic device 101 may access an external network (e.g., an Internet) under the control of a core network (e.g., an evolved packet core (EPC)) of the legacy network. Protocol information for a communication with the legacy network (e.g., LTE protocol information) and protocol information for a communication with the 5G network (e.g., New Radio (NR) protocol information) may be stored in the memory 230 and accessed by another component (e.g., the processor 120, the first communication processor 212, or the second communication processor 214).

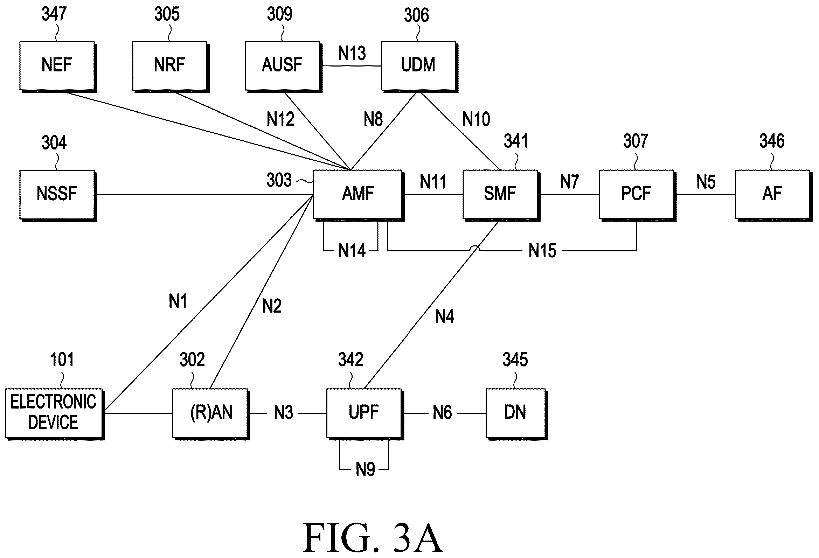

FIG. 3a illustrates a 5G system architecture.

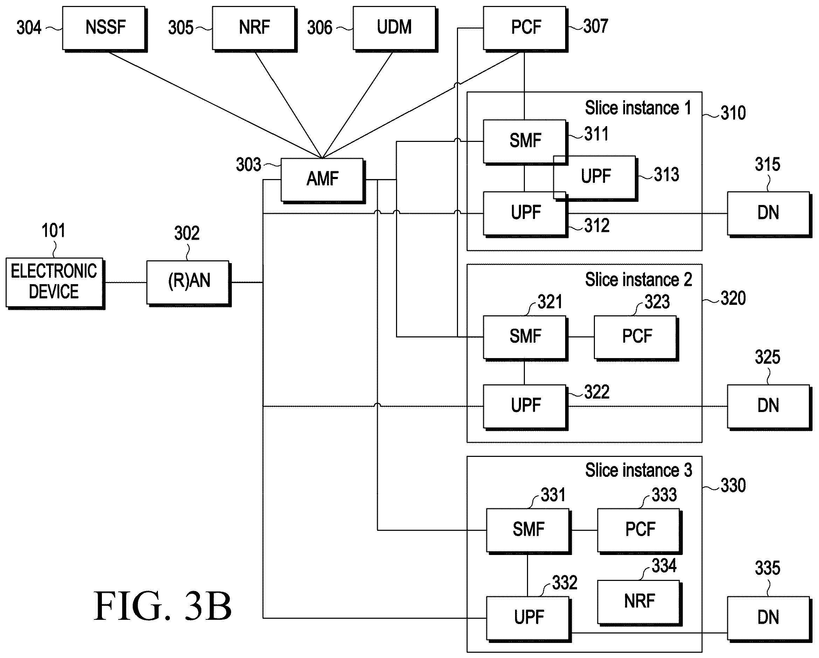

FIG. 3b illustrates a 5G network slice structure.

Hereinafter, with reference to FIGS. 3a and 3b, the overall 5G system will be described, and a network slice will be described.

As illustrated in FIG. 3a, the 5G system architecture may include an electronic device 101 (e.g., a user equipment (UE)), a radio access network (R(AN)) 302, a data network (DN) 345, and a plurality of network functions (NFs) within a core network (CN) which are network elements.

In the 5G system architecture, a function, a connection point, and a protocol may be defined for each of a plurality of NFs, and the 5G system architecture may be illustrated using a reference point which represents a service-based interface corresponding to an NF, and a reference point which represents an interaction between NFs.

The plurality network functions (NFs) may include an authentication server function (AUSF) 309, an access and mobility management function (AMF) 303, a network exposure function (NEF) 347, a network function repository function (NRF) 305, a policy control function (PCF) 307, a session management function (SMF) 341, a unified data management (UDM) 306, a user plane function (UPF) 342, an application function (AF) 346, and a network slice selection function (NSSF) 304.

In various embodiments of the disclosure, an AMF, an SMF, a PCF and a UPF may play a key role in establishing a UE-requested protocol data unit (PDU) ("UE-requested PDU") session and managing traffic between a UE and a DN.

A reference point between the electronic device 101 and the AMF 303 is defined as N1.

The (R)AN 302 may represent a base station using a radio access technology (RAT). For example, the (R)AN 302 may be a base station including a 3GPP access technology or a base station including a non-3GPP access technology such as Wi-Fi. A reference point between the (R)AN 302 and AMF the 303 is defined as N2, and a reference point between the (R)AN 302 and the UPF 342 is defined as N3.

The DN 345 may transfer a PDU to be transmitted in a downlink direction to the UPF 342 or receive a PDU transmitted by the electronic device 101 via the UPF 342. A reference point between the DN 345 and the UPF 342 is defined as N6.

The AMF 303 may provide an access and mobility management function which is independent of an access technology, for example, an access and mobility management function for each electronic device. A reference point between the AMF 303 and the electronic device 101 is defined as N1, a reference point between the AMF 303 and the (R)AN 302 is defined as N2, a reference point between the AMF 303 and the UDM 306 is defined as N8, a reference point between the AMF 303 and the AUSF 309 is defined as N12, and a reference point between the AMF 303 and the SMF 341 is defined as N11.

The SMF 341 may provide a session management function in which, if one electronic device 101 has a plurality of sessions, a different SMF is allocated for each session and each session is managed. An N4 reference point is defined so that the UPF 342 is set using control signal information generated in the SMF 341, and the UPF 342 may report its status to the SMF 341. A reference point between the SMF 341 and the AMF 303 is defined as N11, a reference point between the SMF 341 and the UDM 306 is defined as N10, a reference point between the SMF 341 and the PCF 307 is defined as N7, and a reference point between the SMF 341 and the AMF 303 is defined as N11.

For example, each electronic device 101 may be connected to one AMF 303, whereas in a case of the SMF 341, one electronic device 101 may establish a plurality of sessions, so each session may have different SMFs 311, 321, and 331.

The AF 346 may provide information about a packet flow to the PCF (307), which is responsible for policy control, to ensure a quality of service (QoS).

The PCF 307 may determine a policy such as session management and mobility management based on the information about the packet flow to ensure the QoS, and transfer the policy to the AMF 303 and the SMF 341, thereby enabling at least one of appropriate mobility management, session management, and QoS management to be performed. A reference point between the AF 346 and the PCF 307 is defined as N5.

The AUSF 309 may store data for authentication of the electronic device 101.

The UDM 306 may store at least a part of subscription data and policy data of a user. A reference point between the AUSF 309 and the UDM 306 is defined as N13, a reference point between the AUSF 309 and the AMF 303 is defined as N12, a reference point between the UDM 306 and the AMF 303 is defined as N8, and a reference point between the UDM 306 and the SMF 341 is defined as N10.

CP functions include various functions for controlling a network and a terminal, and the electronic device 101, the (R)AN 302, the UPF 342, the AMF 303, the AF 346, and the DN 345 which are responsible for a mobility management function of two representative functions, and the SMF 341 responsible for a session management function of the two representative functions may be included in the CP functions as two independent functions.

In describing embodiments of the disclosure, the terms slice, service, network slice, network service, application slice, and application service may be used interchangeably.

A mobile communication provider may allocate a network resource suitable for a corresponding service for each slice or for each set of a specific slice. The network resource may mean at least one of a network function (NF) or logical resource or radio resource allocation provided by the network function (NF).

Network slicing is a technology which may apply at least one property of network isolation, customization, and independent management and orchestration to a mobile communication core network structure by bundling a network resource and network functions into one independent slice according to a service to provide the one independent slice according.

The network slicing is a new concept in a 5G core network. The network slicing is a technology which bundles a network resource and network functions required for a service requested by a mobile terminal into one independent slice to provide the one independent slice.

Through the network slicing, a network provider may independently allocate a network resource specific to each service and user, and secure flexibility of a network through resource virtualization based on software defined networking (SDN) and network function virtualization (NFV) technologies, thereby securing scalability and reliability of service and network resource operation.

A public land mobile network (PLMN) may provide a plurality of network slices, and each network slice may be provided to a terminal in a form of a slice instance. For example, the PLMN may include a slice instance 1 310, a slice instance 2 320, and a slice instance 3 330.

The electronic device 101 may access a network and receive a service from at least one of a plurality of slice instances simultaneously or sequentially.

Each slice instance may be configured with network resources required to provide a corresponding network slice. For example, the slice instance 1 310 may be configured with the SMF 311, the UPF 312 and the UPF 313, the slice instance 2 320 may be configured with the SMF 321, the UPF 322, and the PCF 323, and the slice instance 3 330 may be configured with the SMF 331, the UPF 332, the PCF 333, and the NRF 334.

Referring to FIGS. 3a and 3b, the SMF 321 of the slice instance 2 320 may be connected to the PCF 307 in a PLMN level and the PCF 323 in a slice level. The PCF 307 in the PLMN level may manage policy information in the PLMN level and provide it to the SMF 321. The PCF 323 in the slice level belonging to the slice instance 2 320 may manage a policy required to provide a corresponding slice and provide the SMF 321 with corresponding information.

Each slice may be distinguished by a slice ID. For example, the slice ID may be single-network slice selection assistance information (S-NSSAI) defined in 3GPP. According to various embodiments, the electronic device 101 may store information about configured network slice selection assistance information (Configured NSSAI) and a network slice selection policy (NSSP). The configured network slice selection assistance information (Configured NSSAI) may be configured as a list of S-NSSAI of a network slice in which the electronic device 101 subscribes to a home PLMN (HPLMN). The list of S-NASSAI may include at least one S-NSSAI #id. For example, the list of S-NASSAI may include S-NASSAI #a, S-NASSAI #b, S-NASSAI #c, and S-NASSAI #d. The Configured NSSAI is determined based on subscription information of the electronic device 101, so S-NSSAI constituting the Configured NSSAI may be different for each electronic device 101. The Configured NSSAI is determined based on the subscription information of the electronic device 101, so if the subscription information of the electronic device 101 is changed, the Configured NSSAI stored in the electronic device 101 may also be changed. The list of S-NSSAI to which the electronic device 101 subscribes constituting the Configured NSSAI may be stored in the integrated UDM 306 which stores the subscription information of the electronic device 101. The S-NSSAI to which the electronic device 101 subscribes stored in the UDM 306 may be referred to as 'Subscribed S-NSSAI'. The network slice selection policy (NSSP) indicates mapping information between the S-NSSAI (S-NSSAI #id) to which the electronic device 101 subscribes and an application which the S-NSSAI may support. One S-NSSAI #id may be mapped to at least one application. For example, the S-NASSAI #a may be mapped to an App #1 and an App #2, the S-NASSAI #b may be mapped to the App #1, the S-NASSAI #c may be mapped to an App #3, and S-NASSAI #d may be mapped to all supported applications. An NSSP may be stored in the electronic device 101 and a policy control function (PCF) which stores network related policy information. Alternatively, the NSSP may be stored in a user data repository (UDR), and the PCF may request NSSP information from the UDR as needed to obtain the NSSP information from the UDR. When the subscription information of the electronic device 101 is changed, the subscribed slice (Subscribed S-NSSAIs) information of the electronic device 101 stored in the UDM 306 may be changed. When the subscription information of the electronic device 101 is changed, NSSP information stored in the PCF or the UDR may be changed. If at least one of the subscribed slice (subscribed S-NSSAIs) or the NSSP is changed, related setting information stored in the electronic device 101 may also need to be updated.

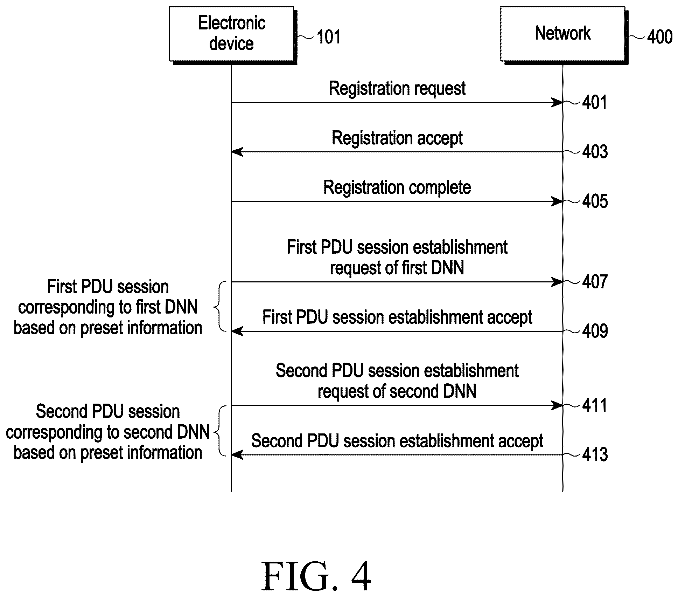

FIG. 4 is a drawing for explaining an operating method of an electronic device and a network according to an embodiment.

According to an embodiment, an electronic device 101 (e.g., a processor 120, a first communication processor 212, a second communication processor 214, and/or an integrated communication processor 260) may transmit, to a network 400, a registration request message for system (e.g., an evolved packet system (EPS) and/or a 5th generation system (5GS)) registration in operation 401. The network 400 may transmit a registration accept message to the electronic device 101 in operation 403. The electronic device 101 may transmit a registration complete message to the network 400 in operation 405. A registration procedure based on operation 401, operation 403, and/or operation 405 may be performed based on, for example, 3rd generation partnership project (3GPP) technical specification (TS) 23.501, but there is no limitation thereon.

According to an embodiment, the electronic device 101 may transmit a first protocol data unit (PDU) session establishment request message of a first data network name (DNN) to the network 400 while being registered in a system in operation 407. In operation 409, the network 400 may transmit a first PDU session establishment accept message corresponding to the first PDU session establishment request message to the electronic device 101. For example, the PDU session establishment accept message may include a PDU session ID, but there is no limitation thereon. In operation 411, the electronic device 101 may transmit a second PDU session establishment request message of a second DNN to the network 400. In operation 413, the network 400 may transmit a second PDU session establishment accept message corresponding to the second PDU session establishment request message to the electronic device 101.

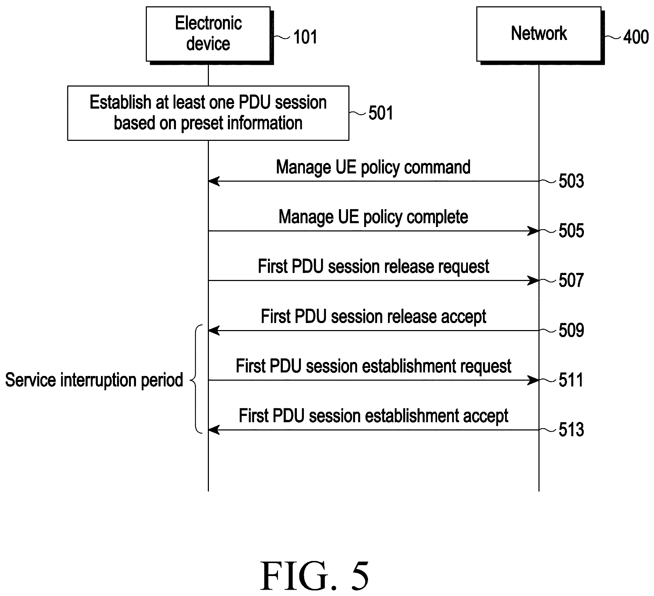

For example, the electronic device 101 may identify the first DNN and the second DNN based on preset information. The electronic device 101 may pre-store an internet protocol multimedia core network subsystem (IMS) for a voice call and the Internet for a cellular data communication as the first DNN and the second DNN, but there is no limitation on a type and/or number of DNNs. Information which replaces the DNN, and/or additional information (for example, which may be a slice service type (SST), a slice differentiator (SD), an internet protocol (IP) type, a session and service continuity (SSC) mode, a proxy call session control function request (P_CSCF_REQ), and/or protocol configuration options (PCO), but there is no limitation thereon) may be stored in the electronic device 101 as preset information. For example, the electronic device 101 may transmit, to the network 400, the first PDU session establishment request message to establish a first PDU session of a DNN of "internet". For example, the first PDU session establishment request message may include a PDU session ID (e.g., PSI=5) and information of the DNN of "internet". For example, the PDU session establishment request message may include S-NSSAI, but there is no limitation. For example, the electronic device 101 may transmit, the network 400, the second PDU session establishment request message to to establish a second PDU session of a DNN of "IMS". For example, the second PDU session establishment request message may include a PDU session ID (e.g., PSI=6) and information of the DNN of "IMS". As described above, the electronic device 101 may establish PDU sessions corresponding to the first DNN and the second DNN based on the preset information. For example, the electronic device 101 may perform PDU session establishment based on the preset information which has been stored in advance before receiving a URSP rule from the network 400 (e.g., a PCF) and/or if the received URSP rule is inapplicable. The electronic device 101 may receive the URSP rule from the network 400 after establishing at least one PDU session, and/or may identify that the URSP rule which has been received in advance is applicable. In this case, the electronic device 101 may need to perform a procedure for releasing the previously established PDU session and establishing a PDU session based on the URSP rule, but this may possibly result in a service interruption, and this will be described with reference to FIG. 5.

FIG. 5 is a drawing for explaining an operating method of an electronic device and a network according to a comparative example for comparison with an embodiment.

Those skilled in the art will appreciate that some of operations described herein, such as those performed by an electronic device 101 and/or a network 400 described in the comparative example, may also be performed by the electronic device 101 and/or the network 400 according to an embodiment.

The electronic device 101 may establish at least one PDU session based on preset information in operation 501. For example, as described with reference to FIG. 4, prior to receiving a URSP rule from the network 400 (e.g., a PCF) and/or in a case that the received URSP rule is inapplicable, PDU session establishment may be performed based on preset information which has been stored in advance. In an example of FIG. 5, it will be assumed that the electronic device 101 establishes the at least one PDU session based on the preset information based on not receiving the URSP rule from the network 400. For example, as described in FIG. 4, the electronic device 101 may perform an operation (e.g., transmission of a PDU session establishment request message, reception of a PDU session establishment accept message, and/or transmission of a PDU session establishment complete message) for establishing a PDU session of a DNN of "IMS" and a PDU session of a DNN of "internet" using information indicating the DNN of the "IMS" and information indicating the DNN of the "internet", which are pre-stored information.

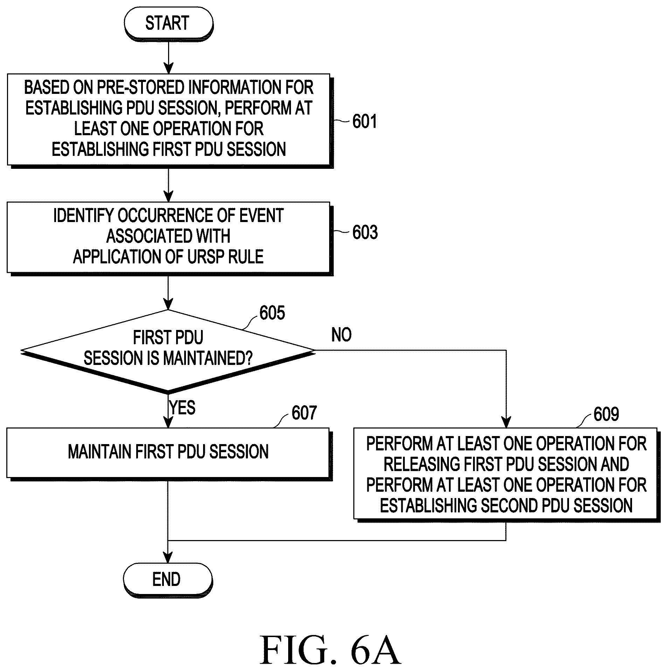

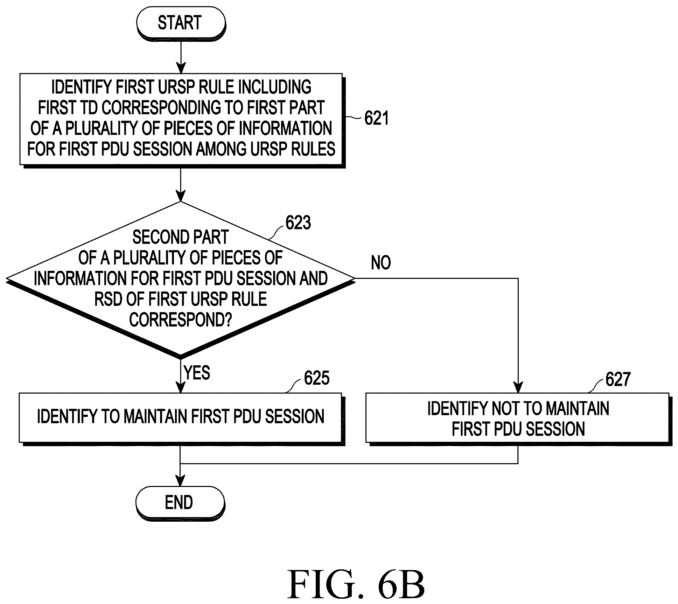

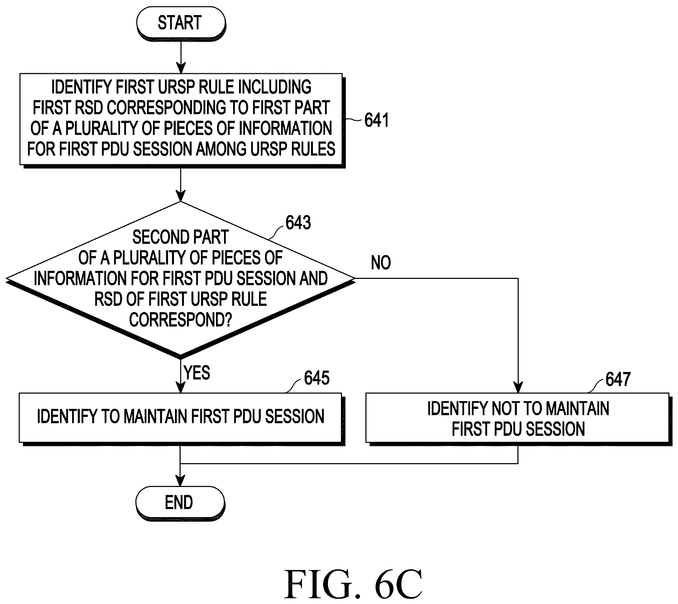

The network 400 may transmit a manage UE policy command message to the electronic device 101 in operation 503. The electronic device 101 may transmit a manage UE policy complete message to the network 400 in operation 505. The manage UE policy command may include, for example, a URSP rule, but there is no limitation thereon. The electronic device 101 may transmit, to the network 400, a first PDU session release request message for a first PDU session in operation 507, and the first PDU session is a PDU session which has preset information corresponding to the URSP rule. For example, if the URSP rule includes a URSP rule corresponding to the DNN of "internet," the electronic device 101 may identify that establishment of a PDU session based on the URSP rule corresponding to the DNN included in the URSP rule is requested. So, the electronic device 101 may transmit the first PDU session release request message to the network 400. The network 400 may transmit a first PDU session release accept message corresponding to the first PDU session release request. Accordingly, the first PDU session may be released. Based on the release of the first PDU session, the electronic device 101 may transmit a first PDU session establishment request message based on the URSP rule to the network 400 in operation 511. For example, it will be assumed that information about the previously established first PDU session and information included in the URSP rule are the same. The network 400 may transmit a first PDU session establishment accept message corresponding to the first PDU session establishment request message to the electronic device 101 in operation 513. In the comparative example, for example, even though the information included in the URSP rule and the information about the previously established PDU session are identical and/or at least partially identical, the electronic device 101 needs to release the first PDU session and reestablish the first PDU session, so a service interruption period may occur. If it is identified that the URSP rule is applicable, the electronic device 101 according to an embodiment may perform a procedure for maintaining the previously established PDU session or establishing a PDU session after releasing the previously established PDU session, based on a comparison result between the information about the previously established PDU session and the information within the URSP rule, and this will be described with reference to FIG. 6.

FIG. 6a is a drawing for explaining an operating method of an electronic device according to an embodiment.

According to an embodiment, an electronic device 101 may perform at least one operation for establishing a first PDU session based on pre-stored information for establishing a PDU session in operation 601. For example, the pre-stored information for establishing the PDU session may include, but is not limited to, a DNN (or an access point name (APN)), information about a PDU type (for example, it is information about an IP version, and for example, it may be information indicating whether it is IPv4 or IPv6, but is not limited thereto), information about whether a P_CSCF_REQ is requested, information about PCO (for example, it may be information about whether an extended protocol configuration options request is requested, but is not limited thereto), S-NSSAI (for example, an SST and/or an SD), and/or information about an ALAWAYS_ON_PDU. A first PDU session established by the electronic device 101 based on the pre-stored information for establishing the PDU session may be named, for example, a default PDU session, and there is no limitation on a trigger for establishing the default PDU session.

After the first PDU session is established, the electronic device 101 may identify occurrence of an event associated with application of a URSP rule in operation 603. For example, the electronic device 101 may identify reception of the URSP rule from a network 400, as the occurrence of the event. For example, the electronic device 101 may receive the URSP rule from the network 400 after establishing the default PDU session, and in this case, the electronic device 101 may identify the reception of the URSP rule from the network 400 as the event. For example, the electronic device 101 may identify reception of a new URSP rule (or a changed or updated URSP rule) as the event. In this case, the electronic device 101 may identify, as the event, the reception of the new URSP rule after establishing a PDU session (in this case, it may not be the default PDU session) based on an existing URSP rule. For example, the electronic device 101 may identify, as the event, identification of applicability of a previously inapplicable URSP rule. For example, a URSP rule may be inapplicable in an evolved packet system (EPS) and may be applicable in a 5th generation system (5GS). The electronic device 101 may manage that the URSP rule is inapplicable when registered in the EPS (or an evolved packet core (EPC)). Thereafter, based on registration in the 5GS (or a 5th generation core (5GC)), the electronic device 101 may identify the applicability of the URSP rule as the event. Meanwhile, there is no limitation on a type and/or number of events associated with the application of the URSP rule.

The electronic device 101 may identify whether to maintain the first PDU session based on a comparison result between the URSP rule and a plurality of pieces of information for the first PDU session in operation 605. If it is identified to maintain the first PDU session (operation 605 - Yes), the electronic device 101 may maintain the first PDU session in operation 607. Those skilled in the art will understand that the electronic device 101 may not perform additional operations in order to maintain the first PDU session. If it is identified not to maintain the first PDU session (operation 605 - No), the electronic device 101 may, in operation 609, perform at least one operation for releasing the first PDU session and, based on the release of the first PDU session, perform at least one operation for establishing a second PDU session based on the URSP rule.

For example, the electronic device 101 may manage (store and/or update) the plurality of pieces of information for the first PDU session based on the establishment of the first PDU session. Table 1 is an example of a plurality of pieces of information for each of the PDU sessions, for example, if the electronic device 101 establishes a PDU session of a DNN of the Internet and a PDU session of a DNN of an IMS.

**[Table 1]**

| PDU Session ID | PDU session type | DNN | SSC mode | SST | SD | RRC status | RSD_ID (route selection descriptors identifier) |
|---|---|---|---|---|---|---|---|
| 5 | ipv4 | internet | 1 | 1 | None | connected | None |
| 6 | ipv6 | IMS | 1 | 1 | None | connected | None |

The plurality of pieces of information in Table 1 may be identified based on, for example, information pre-stored (or pre-set) in the electronic device 101 and/or information provided by the network 400 (for example, information within a PDU session establishment accept message), but there is no limitation on an identifying scheme thereof. The electronic device 101 may compare, for example, the plurality of pieces of information for the PDU session such as Table 1 with the URSP rule. Tables 2 and 3 are examples of URSP rules.

**[Table 2]**

| URSP Rule 1 | |
|---|---|
| Precedence | 1 |
| TrafficDescriptor | |
| DNN | IMS |
| RouteSelectionDescriptor | |
| SST | 1 |
| IPType | IPv6 |

**[Table 3]**

| URSP Rule 2 | |
|---|---|
| Precedence | 2 |
| TrafficDescriptor | |
| Match-All | |
| RouteSelectionDescriptor | |
| STT | 1 |
| SD | 3000 |
| DNN | internet |
| IPTvpe | IPv6 |

For example, the electronic device 101 may identify a comparison target-URSP rule, based on a first part of the plurality of pieces of information for the first PDU session. In an embodiment, the comparison target-URSP rule may be a URSP rule which may be a comparison target. Here, the first part may be, for example, information about types defined in a TD (for example, it may be, but is not limited to, an application descriptor, an IP descriptor, a domain descriptor, a non-IP descriptor, a DNN, and/or connection capabilities), but there is no limitation thereon. For example, the electronic device 101 may use the DNN, which is a type defined in the TD, among the plurality of pieces of information for the PDU session as in Table 1, as the first part for identifying the URSP rule to be compared. Meanwhile, those skilled in the art will understand that, in addition to the DNN described above, the plurality of pieces of information for the PDU session may also include the application descriptor, the IP descriptor, the domain descriptor, the non-IP descriptor, and/or the connection capabilities, and that corresponding information may be used as the first part for identifying the URSP rule to be compared.

Referring back to Table 1, the URSP rule in Table 2 having the same DNN as "IMS", which is a DNN of a PDU session whose PSI is "6", may be identified as a comparison target-URSP rule for a plurality of pieces of information for the PDU session whose PSI is "6".

For example, the electronic device 101 may identify whether the first PDU session is maintained by comparing the second part of the plurality of pieces of information for the first PDU session with the RSD of the comparison target-URSP rule. For example, the second part of the plurality of pieces of information for the first PDU session may be, but is not limited to, information about types defined in the RSD (for example, but not limited to, an SSC mode, an SST, an SD, a DNN, a PDU session type, non-seamless offload indication, ProSe layer-3 UE-to-Network relay Offload indication, ProSe Multi-path preference, access type preference, a PDU session pair ID, an RSN, a time window, and/or location criteria). Referring to Table 1, information about a PDU session type, an SSC mode, an SST, and an SD of the PDU session whose PSI is "6" may be compared with the RSD of the comparison target-URSP rule, as the second part of the plurality of pieces of information for the PDU session. Referring to Table 2, the RSD of the comparison target-URSP rule may be SST=1, and IPType=IPv6. In addition, referring to Table 1, the RSD of the comparison target-URSP rule may be SST=1, and IPType=IPv6 of the PDU session whose PSI is "6". The electronic device 101 may identify that the second part of the plurality of pieces of information for the PDU session and the RSD of the URSP rule are identical, and thus may identify that the PDU session whose PSI is "6" will be maintained. Various embodiments of relationship between a comparison result and whether or not the PDU session is maintained will be described later.

For example, referring back to Table 1, the electronic device 101 may identify the URSP rule in Table 3 having the same DNN as "internet", which is the DNN of the PDU session whose PSI is "5", as the comparison target-URSP rule for the plurality of pieces of information for the PDU session whose PSI is "5". Referring to Table 1, the information for the PDU session type, the SSC mode, the SST, and the SD of the PDU session whose PSI is "5" may be compared with the comparison target-URSP rule, for example, the RSD of the URSP rule in Table 3, as the second part of the plurality of pieces of information for the PDU session. Referring to Table 3, the RSD of the comparison target-URSP rule may be SST=1, SD=3000, DNN=internet, and IPType=IPv6. In addition, referring to Table 1, the RSD of the comparison target-URSP rule may be the SST=1, and IPType=IPv4 of the PDU session whose PSI is "5". The electronic device 101 may identify that IPType=4, which is a part of the second part of the plurality of pieces of information for the PDU session, is different from IPType=6, which is a part of the RSD of the URSP rule in Table 3, which is the the comparison target-URSP rule, and therefore may identify that the PDU session whose PSI is "5" will not be maintained. In this case, the electronic device 101 may perform at least one operation for releasing the PDU session whose PSI is "5". The electronic device 101 may perform at least one operation for establishing a PDU session based on a URSP rule, for example, the URSP rule in Table 3, based on the release of the PDU session whose PSI is "5". For example, the electronic device 101 may transmit a PDU session establishment request message including at least a part of the RSD of the URSP rule in Table 3 to the network 400. Accordingly, the PDU session with IPType=IPv4 is released, and a PDU session with IPType=IPv6 following the URSP rule may be established.

For example, based on the TD of the URSP rule in Table 3 corresponding to "match all", the electronic device 101 may identify that the TD of the URSP rule in Table 3 corresponds to the PDU session whose PSI is 5 and the PDU session whose PSI is 6. In this case, the electronic device 101 may additionally identify whether at least part of the RSD of the URSP rule in Table 3 correspond to at least part of the plurality of pieces of information for the PDU session. The electronic device 101 may identify that the "internet", which is the DNN among the RSD of the URSP rule in Table 3 corresponds to the PDU session whose PSI is 5, and accordingly, the electronic device may identify the comparison target-URSP rule for the PDU session whose PSI is 5 as the URSP rule in Table 3. For example, according to a 3rd generation project partnership (3GPP) standard, the DNN may be included in the TD. The electronic device 101 may use, for example, the DNN commonly reflected in the TD among the RSD of the URSP rule as a parameter for identifying the comparison target-URSP rule, but there is no limitation.

For example, based on the TD of the URSP rule in Table 3 corresponding to "match all", the electronic device 101 may identify that the TD of the URSP rule in Table 3 corresponds to the PDU session whose PSI is 5 and the PDU session whose PSI is 6. In this case, based on the first part of the plurality of pieces of information for the PDU session whose PSI is 6 corresponding to a TD of the URSP rule in Table 2 (e.g., another URSP rule) which is not "match all", the electronic device 101 may exclude the PDU session whose PSI is 6. Accordingly, the electronic device 101 may identify the comparison target-URSP rule for the PDU session whose PSI is 5 as the URSP rule in Table 3.

Meanwhile, the release of the first PDU session and the establishment of the second PDU session in operation 609 are exemplary, and the electronic device 101 may also perform at least one operation for PDU session modification based on an RSD of a URSP rule, instead of operation 609. Those skilled in the art will appreciate that the release of the first PDU session and the establishment of the second PDU session in embodiments of the disclosure as well as in the present embodiment may be replaced with PDU session modification.

According to the above, based on applicability of a URSP rule, rather than releasing all existing PDU sessions at once and then establishing a PDU session according to the URSP rule as in the comparative example, a PDU session which follows the URSP rule is maintained, while a PDU session which does not follow the URSP rule may be selectively released and then established.

FIG. 6b is a drawing for explaining an operating method of an electronic device according to an embodiment.

According to an embodiment, an electronic device 101 may identify a first URSP rule including a first TD corresponding to a first part of a plurality of pieces of information for a first PDU session among URSP rules in operation 621. Here, the first part may be, for example, but not limited to, information about types defined in a TD (for example, but not limited to, an application descriptor, an IP descriptor, a domain descriptor, a non-IP descriptor, a DNN, and/or connection capabilities). For convenience of explanation, the first part may also be named a TD of the first PDU session.

For example, as described above, the electronic device 101 may identify a URSP rule in Table 2 which includes a DNN of "IMS" as a comparison target-URSP rule, and a DNN as a part of a first part of a plurality of pieces of information for a PDU session whose PSI is 6 in Table 1 is "IMS". For example, the electronic device 101 may identify a URSP rule which includes the same information as one or more pieces of information of the first part of the plurality of pieces of information for the PDU session as the comparison target-URSP rule. If a part of the first part of the plurality of pieces of information for the PDU session is the same as a part of information of the URSP rule, but another part may be different from the information of the URSP rule. In this case, the electronic device 101 may identify a URSP rule which includes different information from the part of the first part as the comparison target-URSP rule. Alternatively, the electronic device 101 may identify that the URSP rule which includes the different information from the part of the first part is not the comparison target-URSP rule. The electronic device 101 may apply a specified rule for matching information and/or mismatching information between the first part and the URSP rule, and may identify whether the URSP rule is the comparison target-URSP rule based on an application result, and there is no limitation on a rule for determining whether the URSP rule is the comparison target-URSP rule.

The electronic device 101 may identify, in operation 623, whether a second part of the plurality of pieces of information for the first PDU session corresponds to an RSD of the first URSP rule. The second part of the plurality of pieces of information for the PDU session may be, but is not limited to, information for types defined in the RSD (for example, but not limited to, an SSC mode, an SST, an SD, a DNN, a PDU session type, non-seamless offload indication, ProSe layer-3 UE-to-Network relay Offload indication, ProSe Multi-path preference, access type preference, a PDU session pair ID, an RSN, a time window, and/or location criteria). For convenience of explanation, the second part of the plurality of pieces of information for the PDU session may also be named the RSD of the PDU session. For example, based on the second part of the plurality of pieces of information for the PDU session and at least one of a plurality of pieces of information of the RSD of the URSP rule being identical, the electronic device 101 may identify that the second part of the plurality of pieces of information for the first PDU session corresponds to the RSD of the URSP rule. If a part of the second part of the plurality of pieces of information for the PDU session is the same as a part of an RSD of the URSP rule, but another part may be different from another part of the RSD of the URSP rule. In this case, the electronic device 101 may identify that a URSP rule including different information from the part of the second part corresponds to the PDU session. Alternatively, the electronic device 101 may identify that the URSP rule including the different information from the part of the second part does not correspond to the PDU session. The electronic device 101 may apply a specified rule for matching information and/or mismatching information between the second part and the URSP rule, and may identify whether the PDU session corresponds to the URSP rule based on an application result, and there is no limitation on a rule for determining whether the URSP rule is the comparison target-URSP rule. If it is identified that the second part of the plurality of pieces of information for the first PDU session and the RSD of the URSP rule correspond (Operation 623-Yes), the electronic device 101 may identify to maintain the first PDU session in operation 625. If it is not identified that the second part of the plurality of pieces of information for the first PDU session and the RSD of the URSP rule correspond (Operation 623-No), the electronic device 101 may identify not to maintain the first PDU session in operation 627. In this case, the electronic device 101 may perform at least one operation for releasing the first PDU session and at least one operation for establishing the second PDU session, as described above.

FIG. 6c is a diagram for explaining an operating method of an electronic device according to an embodiment.

According to an embodiment, an electronic device 101 may, in operation 641, identify a first URSP rule including a first RSD corresponding to a first part of a plurality of pieces of information for a first PDU session among URSP rules. In an example in FIG. 6c, the electronic device 101 may identify a comparison target-URSP rule for the first PDU session based on a comparison result between the first part of the plurality of pieces of information for the first PDU session (or a TD of the first PDU session) and an RSD of a URSP rule. For example, a DNN may be included in a TD or may be included in an RSD according to a 3GPP standard. For example, as in an example in Table 3, the DNN may be included in an RSD of a URSP rule, so the electronic device 101 may identify a first URSP rule including a first RSD corresponding to the first part of the plurality of pieces of information for the first PDU session. In operation 643, the electronic device 101 may identify whether a second part of the plurality of pieces of information for the first PDU session corresponds to an RSD of the first URSP rule. For example, in operation 641, the electronic device 101 may identify one URSP rule as the first URSP rule which is the comparison target-URSP rule based on the DNN which may be simultaneously included in the TD and the RSD. The electronic device 101 may identify whether to maintain the first PDU session by comparing the second part of the plurality of pieces of information for the first PDU session and the RSD of the first URSP rule which is a comparison target. If the second part of the plurality of pieces of information for the first PDU session and the RSD of the first URSP rule correspond (Operation 643 - Yes), the electronic device 101 may identify to maintain the first PDU session in operation 645. If the second part of the plurality of pieces of information for the first PDU session and the RSD of the first URSP rule do not correspond (Operation 643 - No), the electronic device 101 may identify not to maintain the first PDU session in operation 647.

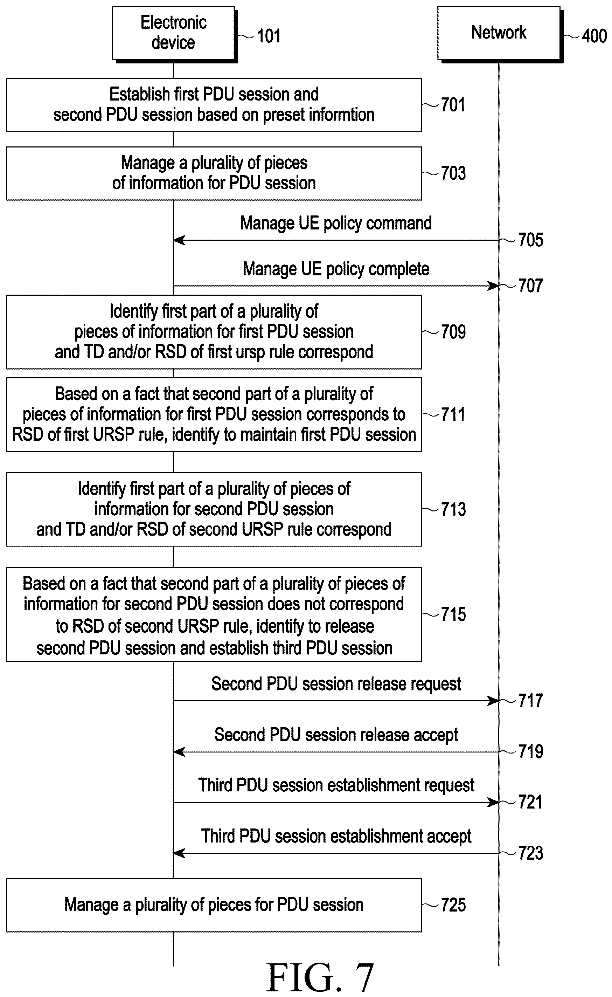

FIG. 7 is a diagram for explaining an operating method of an electronic device and a network according to an embodiment.

According to an embodiment, an electronic device 101 may establish a first PDU session and a second PDU session based on preset information in operation 701. The preset information may include, for example, a DNN, an SST, an SD, an IP type, an SSC mode, P_CSCF_REQ, and/or PCO, but is not limited thereto. As described above, the first PDU session and the second PDU session may also be named a default PDU session, but is not limited thereto. The electronic device 101 may manage a plurality of pieces of information for a PDU session in operation 703. For example, the electronic device 101 may manage the plurality of pieces of information for the PDU session as described in Table 1, but is not limited thereto. The electronic device 101 may receive a manage UE policy command message from a network 400 in operation 705. For example, a URSP rule may be included in the manage UE policy command message. For example, the electronic device 101 may receive URSP rules as described in Table 2 and Table 3 from the network 400, but is not limited thereto. The electronic device 101 may, in operation 707, transmit a manage UE policy complete message corresponding to the manage UE policy command message to the network 400.

The electronic device 101 may identify that a first part of the plurality of pieces of information for the first PDU session and a TD and/or an RSD of a first URSP rule correspond in operation 709. For example, a first part of a plurality of pieces of information for a PDU session may be information for types defined by a TD, but is not limited thereto. As described with reference to FIGS. 6b and 6c, the electronic device 101 may compare the first part of the plurality of pieces of information for the PDU session with the TD of the URSP rule and/or with the RSD of the URSP rule. Based on a comparison result, the electronic device 101 may identify that the first part of the plurality of pieces of information for the first PDU session and the TD and/or RSD of the first URSP rule correspond, and thus identify the first URSP rule as a comparison target-URSP rule for the first PDU session. The electronic device 101 may identify to maintain the first PDU session based on a second part of the plurality of pieces of information for the first PDU session corresponding to the RSD of the first URSP rule in operation 711. For example, a second part of a plurality of pieces of information for the PDU session may be information for types defined by the RSD, but is not limited thereto. Based on the determination to maintain the first PDU session, the electronic device 101 may continuously perform a communication through the first PDU session, and thus, communication disconnection due to unnecessary release and reestablishment of the first PDU session may be prevented.

The electronic device 101 may identify that a first part of a plurality of information for the second PDU session corresponds to a TD and/or an RSD of the second URSP rule in operation 713. Accordingly, the second URSP rule may be identified as a comparison target-URSP rule for the second PDU session. The electronic device 101 may identify to release the second PDU session and establish a third PDU session based on the second part of the plurality of pieces of information for the second PDU session not corresponding to the RSD of the second URSP rule in operation 715. The electronic device 101 may transmit a second PDU session release request message to the network 400 in operation 717. The electronic device 101 may receive a second PDU session release accept message corresponding to the second PDU session release request message from the network 400 in operation 719. Based on the transmission/reception of the second PDU session release request message and the second PDU session release accept message, the second PDU session may be released. Based on the release of the second PDU session, the electronic device 101 may perform at least one operation for establishing the third PDU session, which is a PDU session based on the RSD of the second URSP rule. The electronic device 101 may transmit a third PDU session establishment request message based on the RSD of the second URSP rule to the network 400 in operation 721. The electronic device 101 may manage a plurality of pieces of information for a PDU session in operation 725. For example, the electronic device 101 may delete the plurality of pieces of information for the released second PDU session and add a plurality of pieces of information for the newly established third PUD session, but is not limited thereto.

For example, based on a fact that a PDU session type "ipv4", which is a part of a second part of a plurality of pieces of information for a PDU session whose PSI is "5" in Table 1, does not correspond to "ipv6" which is an IPType of a URSP rule in Table 3 which is a comparison target-URSP rule, the electronic device 101 may perform at least one operation for releasing the PDU session whose PSI is "5". Based on the release of the PDU session whose PSI is "5", the electronic device 101 may perform at least one operation for establishing a PDU session based on the URSP rule in Table 3. The electronic device 101 may update the information for the PDU session as in Table 1 and manage information for a PDU session as in Table 4.

**[Table 4]**

| PDU Session ID | PDU session type | DNN | SSC mode | SST | SD | RRC status | RSD_ID (route selection descriptors identifier) |
|---|---|---|---|---|---|---|---|
| 7 | ipv6 | Internet | 1 | 1 | 3000 | connected | 0x21 |
| 6 | ipv6 | IMS | 1 | 1 | None | connected | 0x11 |

For example, the plurality of pieces of information for the PDU session whose PSI is "5" in Table 1 may be excluded, and a plurality of pieces of information for a PDU session whose PSI is "7" may be included in the information in Table 4. In an example in Table 4, it has been described that a PSI (e.g., 7) of a newly generated PDU session is set differently from a PSI (e.g., 5) of a released PDU session, but this is exemplary, and the PSI of the released PDU session and the PSI of the newly generated PDU session may be the same. Since the PDU session is generated based on the URSP rule as in Table 3, it may be identified that a DNN of the plurality of pieces of information for the PDU session whose PSI is "7" is "internet", a PDU session type is "ipv6", an SST is "1", and an SST is "3000". In addition, in an RSD_ID field, it may be managed that each PDU session corresponds to an RSD of an identifier of 0x21 and an RSD of an identifier of 0x11. With respect to the plurality of pieces of information for the PDU session whose PSI is "6", for example, the RSD_ID field may be changed from none (e.g., a value indicating that the PDU is not generated by RSD) to an identifier (e.g., 0x11) of the corresponding RSD. As described above, when an event for applying a URSP rule occurs, the electronic device 101 may not release all existing PDU sessions and generate a PDU session based on a URSP rule, and the electronic device 101 may maintain a PDU session (e.g., a first PDU session) corresponding to the URSP rule, release a PDU session (e.g., a second PDU session) which does not correspond to the URSP rule, and then establishing a PDU session (e.g., a third PDU session) based on the URSP rule.

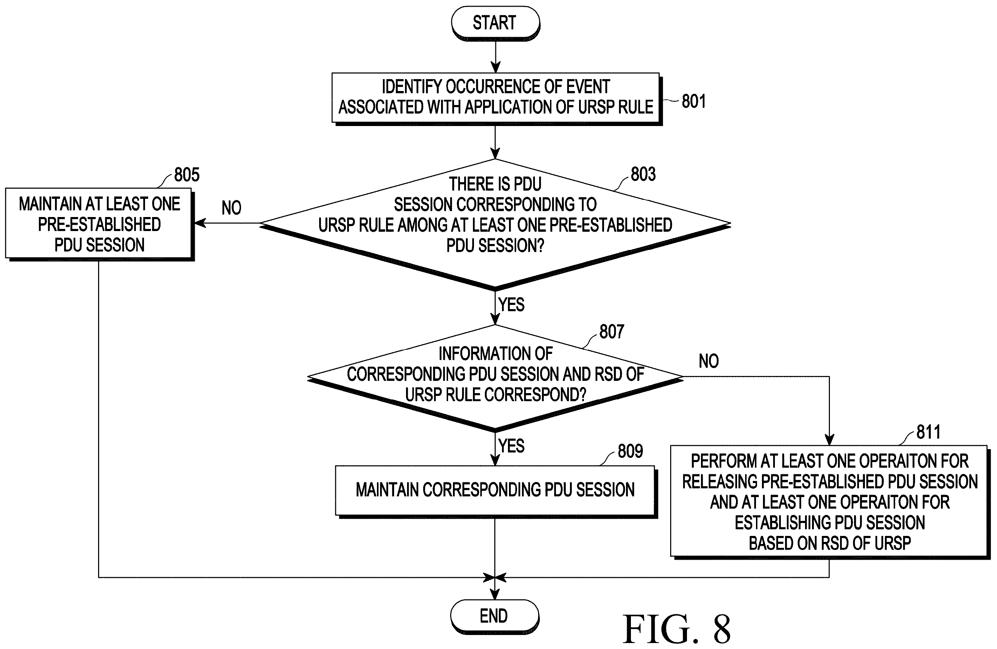

FIG. 8 is a flowchart for explaining an operating method of an electronic device according to an embodiment.

According to an embodiment, an electronic device 101 may identify occurrence of an event associated with application of a URSP rule in operation 801. In operation 803, the electronic device 101 may identify whether there is a PDU session corresponding to a URSP rule among at least one pre-established PDU session (or whether there is a comparison target-URSP rule corresponding to the at least one pre-established PDU session). For example, as described with reference to FIGS. 6b and 6c, the electronic device 101 may identify whether there is a URSP rule corresponding to a first part associated with types defined by a TD among a plurality of pieces of information for a URSP PDU session, but is not limited thereto. If it is identified that there is no PDU session corresponding to the URSP rule among the at least one pre-established PDU session (Operation 803-No), the electronic device 101 may maintain the at least one pre-established PDU session in operation 805. If it is identified that there is the PDU session corresponding to the URSP rule among the at least one pre-established PDU session (or, it is identified that there is a comparison target-URSP rule corresponding to a PDU session), the electronic device 101 may identify whether information of the corresponding PDU session corresponds to an RSD of the URSP rule in operation 807. For example, the electronic device 101 may identify whether a second part of a plurality of pieces of information for the corresponding PDU session corresponds to the RSD of the URSP rule, but is not limited thereto. If it is identified that the information of the corresponding PDU session and the RSD of the URSP rule correspond (Operation 807 - Yes), the electronic device 101 may maintain the corresponding PDU session in operation 809. If it is identified that the information of the corresponding PDU session and the RSD of the URSP rule do not correspond (Operation 807 - No), the electronic device 101 may perform at least one operation for releasing the pre-established PDU session and at least one operation for establishing a PDU session based on the RSD of the URSP in operation 811.

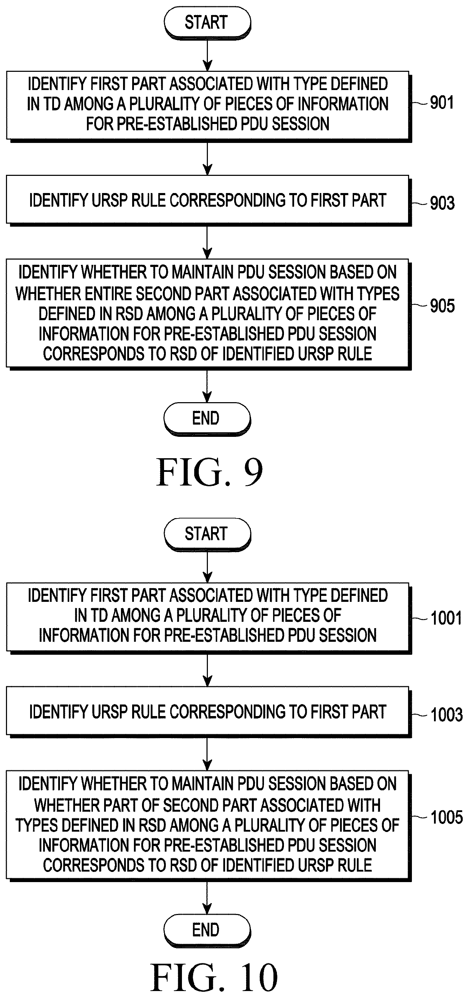

FIG. 9 is a diagram for explaining an operating method of an electronic device according to an embodiment.

According to an embodiment, an electronic device 101 may identify a first part associated with a type defined in a TD among a plurality of pieces of information for a pre-established PDU session in operation 901. For example, the electronic device 101 may identify a DNN among the plurality of pieces of information for the pre-established PDU session as a part of the first part, but those skilled in the art will appreciate that information associated with the type defined in the TD and/or additional information may be used as the first part. The electronic device 101 may identify a URSP rule corresponding to the first part among the URSP rule in operation 903. For example, the electronic device 101, as described with reference to FIGS. 6b and 6c, may identify a URSP rule including a TD and/or an RSD corresponding to the first part as a comparison target-URSP rule for the pre-established PDU session. The electronic device 101 may identify whether to maintain the PDU session based on whether the entire second part associated with types defined in the RSD among the plurality of pieces of information for the pre-established PDU session corresponds to an RSD of the identified rule in operation 905. For example, the electronic device 101 may identify four pieces of information including a PDU session type, an SSC mode, an SST, and an SD, as the second part of the plurality of information for the pre-established PDU session, as shown in Table 1, but is not limited thereto. The electronic device 101 may determine whether to maintain the pre-established PDU session based on whether the entire four pieces of information including the PDU session type, the SSC mode, the SST, and the SD, are identical to the comparison target-URSP rule. For example, if the entire four pieces of information including the PDU session type, the SSC mode, the SST, and the SD, are identical to a plurality of pieces of information of the RSD of the URSP rule, the electronic device 101 may identify that the pre-established PDU session corresponds to the URSP rule and determine to maintain the pre-established PDU session. If a part of the entire four pieces of information including the PDU session type, the SSC mode, the SST, and the SD is not included in the comparison target-URSP rule, the electronic device 101 may also identify whether to maintain the pre-established PDU session based on whether all of a plurality of pieces of information which are not included in the URSP rule is identical to the information of the URSP rule. If any one piece of information is different from the information of the URSP rule, the electronic device 101 may identify that the pre-established PDU session does not correspond to the URSP rule, release the pre-established PDU session, and establish a PDU session based on the URSP rule.

FIG. 10 is a diagram for explaining an operating method of an electronic device according to an embodiment.

According to an embodiment, an electronic device 101 may identify a first part associated with a type defined in a TD among a plurality of pieces of information for a pre-established PDU session in operation 1001. In operation 1003, the electronic device 101 may identify a URSP rule corresponding to the first part among URSP rules. In operation 1005, the electronic device 101 may identify whether to maintain the pre-established PDU session based on whether a part of the second part associated with types defined in an RSD among the plurality of pieces of information for the pre-established PDU session corresponds to an RSD of the identified rule. For example, the electronic device 101 may determine whether to maintain the pre-established PDU session based on whether a part of four pieces of information including a PDU session type, an SSC mode, an SST, and an SD is identical to a comparison target-URSP rule. For example, the electronic device 101 may identify that the pre-established PDU session corresponds to the URSP rule even though the SSC mode does not match the URSP rule based on a fact that the PDU session type, the SST, and the SD which are designated information among the part of the four pieces of information including the PDU session type, the SSC mode, the SST and the SD, match the URSP rule, however, there is no limitation on a type and/or number of information that may be ignored. For example, the electronic device 101 may determine whether to maintain the pre-established PDU session based on the number of pieces of information (or a matching ratio) which match the URSP rule among the total number of pieces of information to be compared, and there is no limitation on a condition for determining whether to maintain the pre-established PDU session.

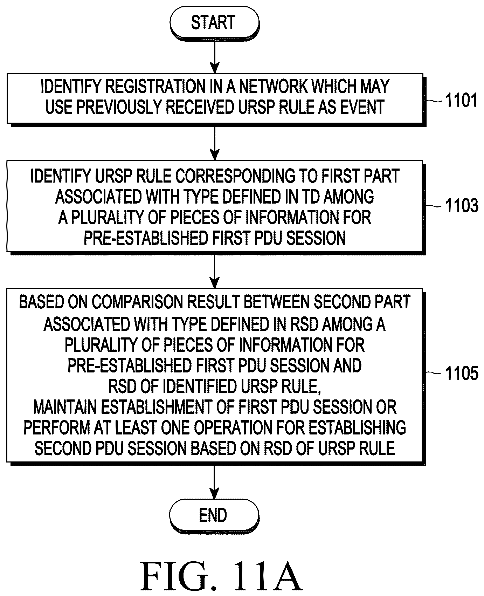

FIG. 11a is a diagram for explaining an operating method of an electronic device according to an embodiment.

According to an embodiment, an electronic device 101 may identify registration in a network which may use a previously received URSP rule as an event (e.g., an event for application of a URSP rule) in operation 1101. For example, whether some RSDs of a URSP rule are applied may be determined per network. Table 5 is an example of an RSD defined in 3GPP TS 24.526.

**[Table 5]**

| RSD parament name | Mapped EPS parameter description |
|---|---|
| SSC Mode Selection | Ignored in EPS if set to SSC mode 1 |
| | Not applicable in EPS if set to SSC mode 2 or 3 |
| Network Slice Selection | Not applicable in EPS |
| DNN Selection | Not applicable in EPS if it contains at least one LADN DNN |
| 5G ProSe layer-3 UE-to-network relay offload indication | Not applicable in EPS |
| Multi-Access preference | Indicates that the PDN connection should be established as a user-plane resource of a multi-access PDU session, if the UE |
| | supports MA PDU session and procedures for PDN connection establishment. Otherwise, not applicable in EPS |
| Time window | Not applicable in EPS |
| Location criteria | Not applicable in EPS |
| 5G ProSe multi-path preference | Not applicable in EPS |

For example, when the electronic device 101 is registered in an EPS (or an EPC), it may be identified that a URSP rule including at least part of parameters in Table 5 in the RSD is not applicable. Even if the electronic device 101 receives the URSP rule from the network 400, the electronic device 101 may identify that the corresponding URSP rule is not applicable in a state of being registered in the EPS and thus not use the corresponding URSP rule. The electronic device 101 may move from the EPS to a 5GS (or may be referred to as a handover). Based on the electronic device 101 being registered in the 5GS, it may be identified that a URSP rule including the at least part of the parameters in Table 5 in the RSD is applicable. Accordingly, the electronic device 101 may identify registration in a network (e.g., the 5GS) which may use the URSP rule as an event. The electronic device 101 may identify a URSP rule corresponding to a first part associated with a type defined in a TD among a plurality of pieces of information for a pre-established first PDU session in operation 1103. In operation 1105, the electronic device 101 may maintain establishment of the first PDU session or perform at least one operation for establishing a second PDU session based on the RSD of the rule, based on a comparison result between a second part associated with a type defined in the RSD among the plurality of pieces of information for the pre-established first PDU session and the RSD of the identified URSP rule.

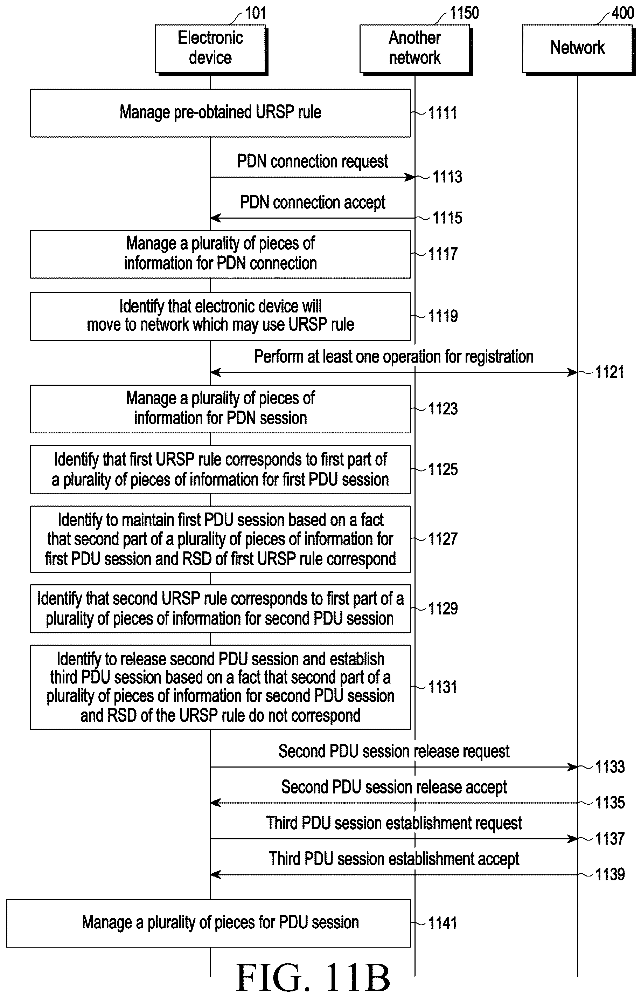

FIG. 11b is a diagram for explaining an operating method of an electronic device and a network according to an embodiment.

According to an embodiment, an electronic device 101 may manage a pre-obtained URSP rule in operation 1111. For example, the electronic device 101 may manage the URSP rule as not applicable when the electronic device 101 is registered in another network 1150, for example, an EPS. For example, the corresponding URSP rule may be managed as not applicable in the other network 1150, for example, the EPS, based on a fact that at least part of parameters in Table 5 described above is included in the RSD. The electronic device 101 may transmit a packet data network (PDN) connection request message to the other network 1150 in operation 1113. The other network 1150 may transmit a PDN connection accept message corresponding to the PDN connection request message to the electronic device 101 in operation 1115. Accordingly, the PDN connection may be established. For example, the electronic device 101 may establish the PDN connection based on pre-stored information, but is not limited thereto. The electronic device 101 may manage a plurality of pieces of information for the PDN connection in operation 1117. The electronic device 101 may identify that the electronic device will move to a network 400, for example, a 5GS, which may use the URSP rule in operation 1119. The electronic device 101 may perform at least one operation for registration in the network 400, e.g., the 5GS in operation 1121. The electronic device 101 may manage a plurality of pieces of information for the PDU session in operation 1123. For example, the electronic device 101 may change the plurality of pieces of information for the PDN connection to a plurality of pieces of information for the PDU session based on the movement from the EPS to the 5GS. For example, an EPS bearer identifier (EBI) of the PDN connection may be changed to a PSI, but this is exemplary and there is no limitation on a type and/or number of pieces of information to be converted.

The electronic device 101 may identify that a first URSP rule corresponds to a first part of the plurality of pieces of information for the first PDU session in operation 1125. The electronic device 101 may identify the first URSP rule as a comparison target-URSP rule for the first PDU session. In operation 1127, the electronic device 101 may identify to maintain the first PDU session based on a fact that the second part of the plurality of pieces of information for the first PDU session and the RSD of the first URSP rule correspond. In operation 1129, the electronic device 101 may identify that a second URSP rule corresponds to a first part of a plurality of pieces of information for a second PDU session. The electronic device 101 may identify the second URSP rule as a comparison target-URSP rule for the second PDU session. The electronic device 101 may identify to release the second PDU session and establish a third PDU session based on a fact that the second part of the plurality of pieces of information for the second PDU session and the RSD of the second URSP rule do not correspond in operation 1131. The electronic device 101 may transmit a second PDU session release request message to the network 400 in operation 1133. The network 400 may transmit a second PDU session release accept message corresponding to the second PDU session release request message to the electronic device 101 in operation 1135. Accordingly, the second PDU session may be released. Based on the release of the second PDU session, the electronic device 101 may transmit a third PDU session establishment request message to the network 400 in operation 1137. The network 400 may transmit a third PDU session establishment accept message corresponding to the third PDU session establishment request message to the electronic device 101 in operation 1139. Accordingly, the third PDU session based on the second URSP rule may be established. The electronic device 101 may manage a plurality of pieces of information for the PDU session in operation 1141. For example, the plurality of pieces of information for the second PDU session may be deleted and a plurality of pieces of information for the third PDU session may be added, but there is no limitation on a management scheme.

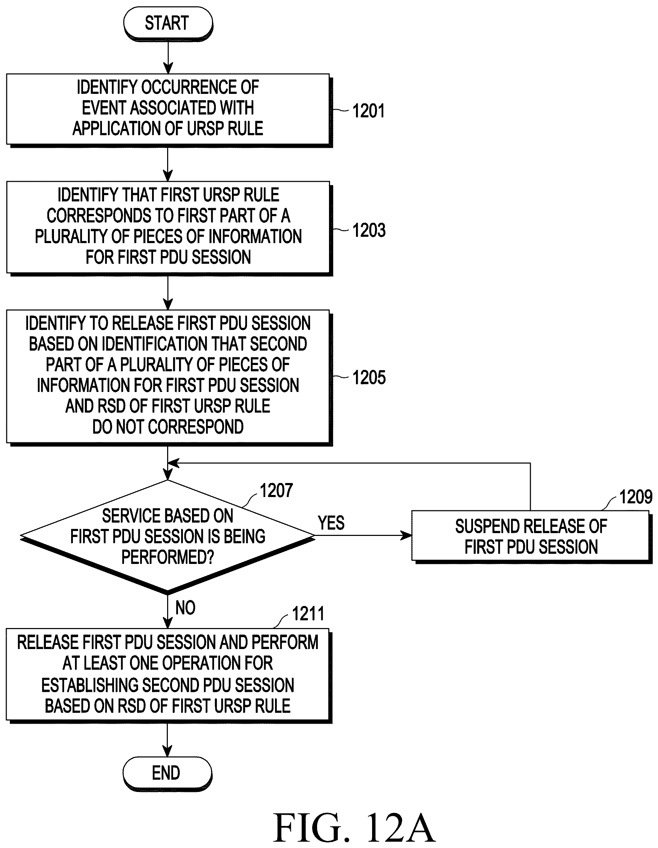

FIG. 12a is a diagram for explaining an operating method of an electronic device according to an embodiment.

According to an embodiment, an electronic device 101 may identify occurrence of an event associated with application of a URSP rule in operation 1201. In operation 1203, the electronic device 101 may identify that a first URSP rule corresponds to a first part of a plurality of pieces of information for a first PDU session. The electronic device 101 may identify the first URSP rule as a comparison target-URSP rule for the first PDU session. In operation 1205, the electronic device 101 may identify to release the first PDU session based on the identification that the second part of the plurality of pieces of information for the first PDU session and an RSD of the first URSP rule do not correspond. In operation 1207, the electronic device 101 may identify whether a service based on the first PDU session is being performed. In an example, the electronic device 101 may identify that the service based on the first PDU session is being performed if an RRC state corresponding to the first PDU session is an RRC_Connected state. If the RRC state corresponding to the first PDU session is an RRC_idle state or an RRC_inactive state, the electronic device 101 may identify that the service based on the first PDU session is not being performed. If it is identified that the service based on the first PDU session is being performed (Operation 1207-Yes), the electronic device 101 may suspend the release of the first PDU session in operation 1209. If the first PDU session is released while the service based on the first PDU session is being performed, it may cause an interruption of the corresponding service, so the electronic device 101 may suspend the release of the PDU session until the service is terminated. Accordingly, the release of the PDU session may be suspended while the service based on the corresponding PDU session is being performed. If it is identified that the service based on the first PDU session is not being performed (Operation 1207-No), the electronic device 101 may release the first PDU session and perform at least one operation for establishing a second PDU session based on the RSD of the first URSP rule in operation 1211.

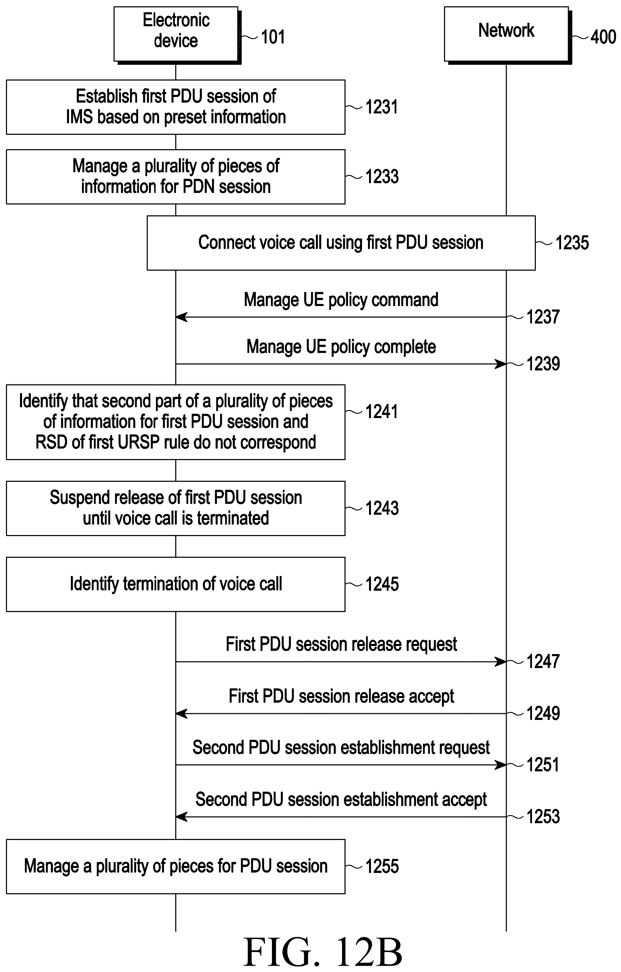

FIG. 12b is a diagram for explaining an operating method of an electronic device and a network according to an embodiment.

According to an embodiment, an electronic device 101 may establish a first PDU session of an IMS based on preset information in operation 1231. The electronic device 101 may manage a plurality of pieces of information for a PDU session in operation 1233. The electronic device 101 may connect a voice call using, for example, the first PDU session of the IMS in operation 1235. While the voice call is connected, an RRC state of the first PDU session of the IMS may be an RRC_CONNECTED state. The electronic device 101 may receive a manage UE policy command message from a network 400 in operation 1237. For example, the electronic device 101 may identify a URSP rule included in the manage UE policy command message. The electronic device 101 may transmit, in operation 1239, a manage UE policy complete message corresponding to the manage UE policy command message to the network 400. In operation 1241, the electronic device 101 may identify that a second part of the plurality of pieces of information for the first PDU session and the RSD of the first URSP rule do not correspond. In operation 1243, the electronic device 101 may suspend the release of the first PDU session until the voice call is terminated. In operation 1245, the electronic device 101 may identify the termination of the voice call. For example, the electronic device 101 may identify whether the RRC state corresponding to the first PDU session is changed from the RRC_CONNECTED state to another state as whether the voice call is terminated, but this is exemplary and there is no limitation on a scheme of identifying whether the voice call is terminated. The electronic device 101 may transmit a first PDU session release request message to the network 400 based on the identification of termination of the voice call in operation 1247. In operation 1249, the network 400 may transmit a first PDU session release accept message corresponding to the first PDU session release request message to the electronic device 101. Accordingly, the first PDU session may be released. The electronic device 101 may transmit a second PDU session establishment request message to the network 400 based on the release of the first PDU session in operation 1251. In operation 1253, the network 400 may transmit a second PDU session establishment accept message corresponding to the second PDU session establishment request message to the electronic device 101. Accordingly, the second PDU session based on the first URSP rule may be established. The electronic device 101 may manage a plurality of pieces of information for the PDU session in operation 1255. For example, the plurality of pieces of information for the first PDU session may be deleted and a plurality of pieces of information for the second PDU session may be added, but there is no limitation on a management scheme.

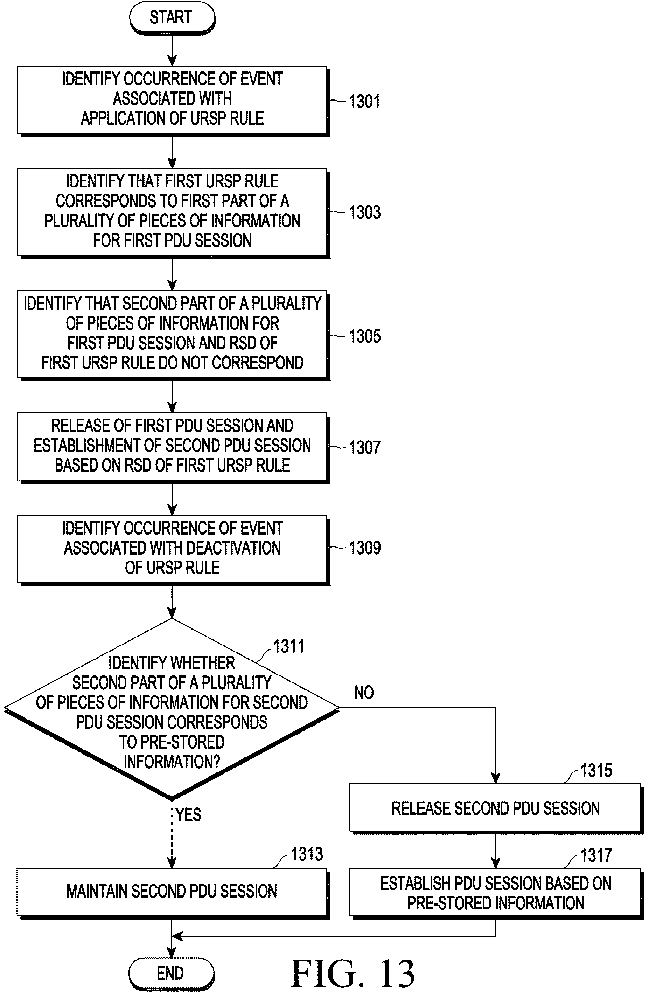

FIG. 13 is a drawing for explaining an operating method of an electronic device according to an embodiment.

According to an embodiment, the electronic device 101 may, in operation 1301, identify occurrence of an event associated with application of a URSP rule. In operation 1303, the electronic device 101 may identify that a first URSP rule corresponds to a first part of a plurality of pieces of information for a first PDU session. In operation 1305, the electronic device 101 may identify that a second part of the plurality of pieces of information for the first PDU session and an RSD of the first URSP rule do not correspond. So, in operation 1307, the electronic device 101 may perform release of the first PDU session and establishment of a second PDU session based on the RSD of the first URSP rule. In operation 1309, the electronic device 101 may identify occurrence of an event associated with deactivation of the URSP rule. For example, the electronic device 101 may identify reception of information (e.g., an empty rule) about deletion of the URSP rule from the network 400 as the event associated with the deactivation of the URSP rule. For example, the electronic device 101 may identify registration to another network (e.g., an EPS) incapable of applying the URSP rule, as the occurrence of the event associated with the deactivation of the URSP rule, but there is no limitation thereon. Based on the identification of the event associated with the deactivation of the URSP rule, the electronic device 101 may identify whether a second part of a plurality of pieces of information for a second PDU session corresponds to pre-stored information (e.g., information for generating a default PDU session) in operation 1311. If the second part of the plurality of pieces of information for the second PDU session corresponds to the pre-stored information (operation 1311 - Yes), the electronic device 101 may maintain the second PDU session in operation 1313. If the second part of the plurality of pieces of information for the second PDU session does not correspond to the pre-stored information (operation 1311 - No), the electronic device 101 may perform at least one operation for releasing the second PDU session in operation 1315. Based on the release of the second PDU session, the electronic device 101 may perform at least one operation for establishing a PDU session based on the pre-stored information (e.g., information for establishing a default PDU session) in operation 1317. As described above, based on the inapplicability of the URSP rule, existing PDU sessions are not collectively released and then a PDU session is not established according to the information for generating a pre-stored default PDU session, but a PDU session which follows the information for generating the default PDU session may be maintained, and a PDU session which does not follow the information for generating the default PDU session may be selectively released and then established. For example, the number of PDU sessions which follow the information for generating the default PDU session and/or PDU sessions which do not follow the information for generating the default PDU session may be one or more, and there is no limitation therefor.

An electronic device (101) may include at least one processor (120,212,214,260).

The electronic device (101) may include memory (130) which stores instructions.

The instructions, when executed by the at least one processor (120,212,214,260) individually or collectively, may cause the electronic device (101) to perform at least one operation for establishing a first protocol data unit (PDU) session, based on information for establishing a PDU session which is pre-stored in the electronic device (101).

The instructions, when executed by the at least one processor (120,212,214,260) individually or collectively, may cause the electronic device (101) to identify occurrence of an event associated with application of a URSP rule.

The instructions, when executed by the at least one processor (120,212,214,260) individually or collectively, may cause the electronic device (101) to, based on identifying the occurrence of the event, identify whether to maintain or release the first PDU session based on a comparison result between the URSP rule and a plurality of pieces of information for the first PDU session.

The instructions, when executed by the at least one processor (120,212,214,260) individually or collectively, may cause the electronic device (101) to, based on identifying to release the first PDU session, perform at least one operation for releasing the first PDU session, and perform, based on the release of the first PDU session, at least one operation for establishing a second PDU session based on at least part of the URSP rule.

The instructions, when executed by the at least one processor (120,212,214,260) individually or collectively, may cause the electronic device (101) to identify that a first traffic descriptor (TD) of the URSP rule corresponds to a first part of the plurality of pieces of information for the first PDU session.

The instructions, when executed by the at least one processor (120,212,214,260) individually or collectively, may cause the electronic device (101) to, based on whether a second part of the plurality of pieces of information for the first PDU session corresponds to a first route selection descriptor (RSD) of the URSP, identify whether to maintain or release the first PDU.

The first part of the plurality of pieces of information for the first PDU session may comprise information associated with at least one type defined by a TD, and/or the second part of the plurality of pieces of information for the first PDU session may comprise information associated with at least one type defined by an RSD.

The instructions, when executed by the at least one processor (120,212,214,260) individually or collectively, may cause the electronic device (101) to, based on whether all of at least one piece of information included in the second part is identical to at least part of the first RSD, identify whether to maintain or release the first PDU.

The instructions, when executed by the at least one processor (120,212,214,260) individually or collectively, may cause the electronic device (101) to, based on whether a part of the at least one piece of information included in the second part is identical to the at least part of the first RSD, identify whether to maintain or release the first PDU.

The instructions, when executed by the at least one processor (120,212,214,260) individually or collectively, may cause the electronic device (101) to identify that a first traffic descriptor (TD) of the URSP rule corresponds to a second part of the plurality of pieces of information for the first PDU session, the second part being associated with at least one type defined by an RSD.

The instructions, when executed by the at least one processor (120,212,214,260) individually or collectively, may cause the electronic device (101) to, based on whether the second part of the plurality of pieces of information for the first PDU session corresponds to a first RSD of the URSP, identify whether to maintain or release the first PDU.

The instructions, when executed by the at least one processor (120,212,214,260) individually or collectively, may cause the electronic device (101) to, based on identifying that at least one operation based on the first PDU session is not performed, perform the at least one operation for releasing the first PDU session and the at least one operation for establishing the second PDU session.

The instructions, when executed by the at least one processor (120,212,214,260) individually or collectively, may cause the electronic device (101) to, based on identifying that at least one operation based on the first PDU session is being performed, suspend performing of the performance of the at least one operation for releasing the first PDU session and the at least one operation for establishing the second PDU session, until the at least one operation based on the first PDU session completes.

The instructions, when executed by the at least one processor (120,212,214,260) individually or collectively, may cause the electronic device (101) to, based on identifying that the at least one operation based on the first PDU session completes, perform the at least one operation for releasing the first PDU session and the at least one operation for establishing the second PDU session.

The instructions, when executed by the at least one processor (120,212,214,260) individually or collectively, may cause the electronic device (101) to identify registration of the electronic device (101) to a network capable of applying the URSP rule which is pre-obtained by the electronic device (101), as the occurrence of the event.

The instructions, when executed by the at least one processor (120,212,214,260) individually or collectively, may cause the electronic device (101) to, according to mobility of the electronic device (101) from another network incapable of applying the URSP rule to the network capable of applying the URSP, perform at least one operation for registering to the network capable of applying the URSP.

The URSP rule may not be applied while the electronic device (101) registers to the other network.

The instructions, when executed by the at least one processor (120,212,214,260) individually or collectively, may cause the electronic device (101) to identify reception of the URSP rule from a network, as the occurrence of the event.

The instructions, when executed by the at least one processor (120,212,214,260) individually or collectively, may cause the electronic device (101) to, based on identifying occurrence of an event associated with deactivation of the URSP rule, based on information associated with at least one type defined by a TD of a plurality of pieces of information for the second PDU session not corresponding to the information for establishing PDU session which is pre-stored in the electronic device (101), perform at least one operation for releasing the second PDU session and at least one operation for establishing a PDU session based on the information for establishing PDU session which is pre-stored in the electronic device (101).

The instructions, when executed by the at least one processor (120,212,214,260) individually or collectively, may cause the electronic device (101) to identify reception of a command for deleting the URSP rule from a network, as the occurrence of the event associated with the deactivation of the URSP rule.

The instructions, when executed by the at least one processor (120,212,214,260) individually or collectively, may cause the electronic device (101) to identify registration to another network incapable of applying the URSP rule, as the occurrence of the event associated with the deactivation of the URSP rule.

The instructions, when executed by the at least one processor (120,212,214,260) individually or collectively, may cause the electronic device (101) to, based on identifying to maintain the first PDU session, maintain the first PDU session.

An operating method of an electronic device (101) may include performing at least one operation for establishing a first protocol data unit (PDU) session, based on information for establishing a PDU session which is pre-stored in the electronic device (101).

The operating method of the electronic device (101) may include identifying occurrence of an event associated with application of a URSP rule.

The operating method of the electronic device (101) may include, based on identifying the occurrence of the event, identifying whether to maintain or release the first PDU session based on a comparison result between the URSP rule and a plurality of pieces of information for the first PDU session.

The operating method of the electronic device (101) may include, based on identifying to release the first PDU session, performing at least one operation for releasing the first PDU session, and performing, based on the release of the first PDU session, at least one operation for establishing a second PDU session based on at least part of the URSP rule.

The operating method of the electronic device (101) may include identifying that a first traffic descriptor (TD) of the URSP rule corresponds to a first part of the plurality of pieces of information for the first PDU session.

The operating method of the electronic device (101) may include, based on whether a second part of the plurality of pieces of information for the first PDU session corresponds to a first route selection descriptor (RSD) of the URSP, identifying whether to maintain or release the first PDU.

The first part of the plurality of pieces of information for the first PDU session may comprise information associated with at least one type defined by a TD, and/or the second part of the plurality of pieces of information for the first PDU session may comprise information associated with at least one type defined by an RSD.

The operating method of the electronic device (101) may include, based on whether all of at least one piece of information included in the second part is identical to at least part of the first RSD, identify whether to maintain or release the first PDU.

The operating method of the electronic device (101) may include, based on whether a part of the at least one piece of information included in the second part is identical to the at least part of the first RSD, identify whether to maintain or release the first PDU.

The operating method of the electronic device (101) may include identifying that a first traffic descriptor (TD) of the URSP rule corresponds to a second part of the plurality of pieces of information for the first PDU session, the second part being associated with at least one type defined by an RSD.

The operating method of the electronic device (101) may include, based on whether the second part of the plurality of pieces of information for the first PDU session corresponds to a first RSD of the URSP, identifying whether to maintain or release the first PDU.

The operating method of the electronic device (101) may include, based on identifying that at least one operation based on the first PDU session is not performed, perform the at least one operation for releasing the first PDU session and the at least one operation for establishing the second PDU session.

The operating method of the electronic device (101) may include, based on identifying that at least one operation based on the first PDU session is being performed, suspend performing of the performance of the at least one operation for releasing the first PDU session and the at least one operation for establishing the second PDU session, until the at least one operation based on the first PDU session completes.

The operating method of the electronic device (101) may include, based on identifying that the at least one operation based on the first PDU session completes, perform the at least one operation for releasing the first PDU session and the at least one operation for establishing the second PDU session.

The operating method of the electronic device (101) may include identifying registration of the electronic device (101) to a network capable of applying the URSP rule which is pre-obtained by the electronic device (101), as the occurrence of the event.

The operating method of the electronic device (101) may include, according to mobility of the electronic device (101) from another network incapable of applying the URSP rule to the network capable of applying the URSP, performing at least one operation for registering to the network capable of applying the URSP.

The URSP rule may not be applied while the electronic device (101) registers to the other network.

The operating method of the electronic device (101) may include identifying reception of the URSP rule from a network, as the occurrence of the event.

The operating method of the electronic device (101) may include, based on identifying occurrence of an event associated with deactivation of the URSP rule, based on information associated with at least one type defined by a TD of a plurality of pieces of information for the second PDU session not corresponding to the information for establishing PDU session which is pre-stored in the electronic device (101), performing at least one operation for releasing the second PDU session and at least one operation for establishing a PDU session based on the information for establishing PDU session which is pre-stored in the electronic device (101).

The operating method of the electronic device (101) may include identifying reception of a command for deleting the URSP rule from a network, as the occurrence of the event associated with the deactivation of the URSP rule.

The operating method of the electronic device (101) may include identifying registration to another network incapable of applying the URSP rule, as the occurrence of the event associated with the deactivation of the URSP rule.

The operating method of the electronic device (101) may include, based on identifying to maintain the first PDU session, maintaining the first PDU session.

A storage medium storing computer-readable instructions may be provided.

The instructions, when executed by at least one processor (120,212,214,260) individually or collectively, cause an electronic device (101) to, based on information for establishing a protocol data unit (PDU) session which is pre-stored in the electronic device (101), perform at least one operation for establishing a first PDU session.

The instructions, when executed by at least one processor (120,212,214,260) individually or collectively, cause the electronic device (101) to identify occurrence of an event associated with application of a URSP rule.

The instructions, when executed by at least one processor (120,212,214,260) individually or collectively, cause the electronic device (101) to, based on identifying the occurrence of the event, identify whether to maintain or release the first PDU session based on a comparison result between the URSP rule and a plurality of pieces of information for the first PDU session.

The instructions, when executed by at least one processor (120,212,214,260) individually or collectively, cause the electronic device (101) to, based on identifying to release the first PDU session, perform at least one operation for releasing the first PDU session, and perform, based on the release of the first PDU session, at least one operation for establishing a second PDU session based on at least part of the URSP rule.

An electronic device (101) may include at least one processor (120,212,214,260).

The electronic device (101) may include memory (130) which stores instructions.

The instructions, when executed by the at least one processor (120,212,214,260) individually or collectively, may cause the electronic device (101) to, based on information for establishing a protocol data unit (PDU) session which is pre-stored in the electronic device (101), perform at least one operation for establishing a first PDU session.

The instructions, when executed by the at least one processor (120,212,214,260) individually or collectively, may cause the electronic device (101) to identify occurrence of an event associated with application of a URSP rule.

The instructions, when executed by the at least one processor (120,212,214,260) individually or collectively, may cause the electronic device (101) to, based on identifying the occurrence of the event, identify whether to adjust the first PDU session based on a comparison result between the URSP rule and a plurality of pieces of information for the first PDU session.

The instructions, when executed by the at least one processor (120,212,214,260) individually or collectively, may cause the electronic device (101) to, based on identifying to adjust the first PDU session, perform, based on at least part of the URSP rule, at least one operation for adjusting the first PDU session.

An operating method of an electronic device (101) may include performing at least one operation for establishing a first protocol data unit (PDU) session, based on information for establishing a PDU session which is pre-stored in the electronic device (101).

The operating method of the electronic device (101) may include identifying occurrence of an event associated with application of a URSP rule.

The operating method of the electronic device (101) may include, based on identifying the occurrence of the event, identify whether to adjust the first PDU session based on a comparison result between the URSP rule and a plurality of pieces of information for the first PDU session.

The operating method of the electronic device (101) may include, based on identifying to adjust the first PDU session, perform, based on at least part of the URSP rule, at least one operation for adjusting the first PDU session.

A storage medium storing computer-readable instructions may be provided.

The instructions, when executed by the at least one processor (120,212,214,260) individually or collectively, may cause the electronic device (101) to perform at least one operation for establishing a first protocol data unit (PDU) session, based on information for establishing a PDU session which is pre-stored in the electronic device (101).

The instructions, when executed by the at least one processor (120,212,214,260) individually or collectively, may cause the electronic device (101) to identify occurrence of an event associated with application of a URSP rule.

The instructions, when executed by the at least one processor (120,212,214,260) individually or collectively, may cause the electronic device (101) to, based on identifying the occurrence of the event, identify whether to adjust the first PDU session based on a comparison result between the URSP rule and a plurality of pieces of information for the first PDU session.

The instructions, when executed by the at least one processor (120,212,214,260) individually or collectively, may cause the electronic device (101) to, based on identifying to adjust the first PDU session, perform, based on at least part of the URSP rule, at least one operation for adjusting the first PDU session.

An electronic device (101) may comprise at least one processor (120, 212, 214, 260) and memory storing instructions. The instructions, when executed by the at least one processor (120, 212, 214, 260) individually or collectively, cause the electronic device (101) to: perform at least one operation for establishing a first protocol data unit (PDU) session, based on information for establishing a PDU session which is pre-stored in the electronic device (101); receive a command to change a URSP rule related to the PDU session from a network; compare the newly received URSP rule with at least one piece of information for the first PDU session; if the at least one piece of information matches information according to the newly received URSP rule, maintain the first PDU session; and, if the at least one piece of information does not match information according to the newly received URSP rule, release the first PDU session and establish a second PDU session based at least partly on the newly received URSP rule. The command to change the URSP rule may be received from a network entity such as a PCF. The at least one piece of information may comprise a traffic descriptor and/or a route selection descriptor.

An electronic device (101) may comprise at least one processor (120, 212, 214, 260) and memory storing instructions. The instructions, when executed by the at least one processor (120, 212, 214, 260) individually or collectively, cause the electronic device (101) to: receive a first URSP rule; perform at least one operation for establishing a first protocol data unit (PDU) session, based on information for establishing a PDU session received in the first URSP rule; receive a command to change the first URSP rule to a second URSP rule; compare the second URSP rule with at least one piece of information for the first PDU session; if the at least one piece of information matches information according to the second URSP rule, maintain the first PDU session; and, if the at least one piece of information does not match information according to the second URSP rule, release the first PDU session and establish a second PDU session based at least partly on the second URSP rule. The first URSP rule may be received from a network entity such as a PCF. The command to change from the first URSP rule to the second URSP rule may be received from a network entity such as a PCF. The at least one piece of information may comprise a traffic descriptor and/or a route selection descriptor.

An operating method of an electronic device may comprise performing at least one operation for establishing a first protocol data unit (PDU) session, based on information for establishing a PDU session which is pre-stored in the electronic device (101); receiving a command to change a URSP rule related to the PDU session from a network; comparing the newly received URSP rule with at least one piece of information for the first PDU session; if the at least one piece of information matches information according to the newly received URSP rule, maintaining the first PDU session; and, if the at least one piece of information does not match information according to the newly received URSP rule, releasing the first PDU session and establish a second PDU session based at least partly on the newly received URSP rule. The command to change the URSP rule may be received from a network entity such as a PCF. The at least one piece of information may comprise a traffic descriptor and/or a route selection descriptor.

An operating method of an electronic device may comprise receiving a first URSP rule; performing at least one operation for establishing a first protocol data unit (PDU) session, based on information for establishing a PDU session received in the first URSP rule; receiving a command to change the first URSP rule to a second URSP rule; comparing the second URSP rule with at least one piece of information for the first PDU session; if the at least one piece of information matches information according to the second URSP rule, maintaining the first PDU session; and, if the at least one piece of information does not match information according to the second URSP rule, releasing the first PDU session and establish a second PDU session based at least partly on the second URSP rule. The first URSP rule may be received from a network entity such as a PCF. The command to change from the first URSP rule to the second URSP rule may be received from a network entity such as a PCF. The at least one piece of information may comprise a traffic descriptor and/or a route selection descriptor.

A storage medium may store computer-readable instructions, wherein the instructions, when executed by at least one processor individually or collectively, cause an electronic device to: perform at least one operation for establishing a first protocol data unit (PDU) session, based on information for establishing a PDU session which is pre-stored in the electronic device (101); receive a command to change a URSP rule related to the PDU session from a network; compare the newly received URSP rule with at least one piece of information for the first PDU session; if the at least one piece of information matches information according to the newly received URSP rule, maintain the first PDU session; and, if the at least one piece of information does not match information according to the newly received URSP rule, release the first PDU session and establish a second PDU session based at least partly on the newly received URSP rule. The command to change the URSP rule may be received from a network entity such as a PCF. The at least one piece of information may comprise a traffic descriptor and/or a route selection descriptor.

A storage medium may store computer-readable instructions, wherein the instructions, when executed by at least one processor individually or collectively, cause an electronic device to: receive a first URSP rule; perform at least one operation for establishing a first protocol data unit (PDU) session, based on information for establishing a PDU session received in the first URSP rule; receive a command to change the first URSP rule to a second URSP rule; compare the second URSP rule with at least one piece of information for the first PDU session; if the at least one piece of information matches information according to the second URSP rule, maintain the first PDU session; and, if the at least one piece of information does not match information according to the second URSP rule, release the first PDU session and establish a second PDU session based at least partly on the second URSP rule. The first URSP rule may be received from a network entity such as a PCF. The command to change from the first URSP rule to the second URSP rule may be received from a network entity such as a PCF. The at least one piece of information may comprise a traffic descriptor and/or a route selection descriptor.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to a particular embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. An electronic device (101), comprising:
at least one processor (120, 212, 214, 260); and
memory (130) storing instructions, wherein the instructions, when executed by the at least one processor (120, 212, 214, 260) individually or collectively, cause the electronic device (101) to:
perform at least one operation for establishing a first protocol data unit, PDU, session, based on information for establishing a PDU session which is pre-stored in the electronic device (101),
identify occurrence of an event associated with application of a user equipment route selection policy, URSP, rule,
based on identifying the occurrence of the event, identify whether to maintain or release the first PDU session based on a comparison result between the URSP rule and a plurality of pieces of information for the first PDU session, and
based on identifying to release the first PDU session, perform at least one operation for releasing the first PDU session, and perform, based on the release of the first PDU session, at least one operation for establishing a second PDU session based on at least part of the URSP rule.

2. The electronic device (101) of claim 1, wherein the instructions, when executed by the at least one processor (120, 212, 214, 260) individually or collectively, cause the electronic device (101) to, as at least part of identifying whether to maintain or release the first PDU session based on the comparison result between the URSP rule and the plurality of pieces of information for the first PDU session,
identify that a first traffic descriptor, TD, of the URSP rule corresponds to a first part of the plurality of pieces of information for the first PDU session, and
based on whether a second part of the plurality of pieces of information for the first PDU session corresponds to a first route selection descriptor, RSD, of the URSP, identify whether to maintain or release the first PDU.

3. The electronic device (101) of claim 1 or 2, wherein the first part of the plurality of pieces of information for the first PDU session comprises information associated with at least one type defined by a TD, and/or the second part of the plurality of pieces of information for the first PDU session comprises information associated with at least one type defined by an RSD.

4. The electronic device (101) of any one of claims 1 to 3, wherein the instructions, when executed by the at least one processor (120, 212, 214, 260) individually or collectively, cause the electronic device (101) to, as at least part of, based on whether the second part of the plurality of pieces of information for the first PDU session corresponds to the first RSD of the URSP, identifying whether to maintain or release the first PDU session,
based on whether all of at least one piece of information included in the second part is identical to at least part of the first RSD, identify whether to maintain or release the first PDU.

5. The electronic device (101) of any one of claims 1 to 4, wherein the instructions, when executed by the at least one processor (120, 212, 214, 260) individually or collectively, cause the electronic device (101) to, as at least part of, based on whether the second part of the plurality of pieces of information for the first PDU session corresponds to the first RSD of the URSP, identifying whether to maintain or release the first PDU session,
based on whether a part of the at least one piece of information included in the second part is identical to the at least part of the first RSD, identify whether to maintain or release the first PDU.

6. The electronic device (101) of any one of claims 1 to 5, wherein the instructions, when executed by the at least one processor (120, 212, 214, 260) individually or collectively, cause the electronic device (101) to, as at least part of, based on the comparison result between the URSP rule and the plurality of pieces of information for the first PDU session, identifying whether to maintain or release the first PDU session,
identify that a first TD of the URSP rule corresponds to a second part of the plurality of pieces of information for the first PDU session, the second part being associated with at least one type defined by an RSD, and
based on whether the second part of the plurality of pieces of information for the first PDU session corresponds to a first RSD of the URSP, identify whether to maintain or release the first PDU.

7. The electronic device (101) of any one of claims 1 to 6, wherein the instructions, when executed by the at least one processor individually or collectively, cause the electronic device to, as at least part of, based on identifying to release the first PDU session, performing the at least one operation for releasing the first PDU session, and performing, based on the release of the first PDU session, the at least one operation for establishing the second PDU session based on the at least part of the URSP rule,
based on identifying that at least one operation based on the first PDU session is not being performed, perform the at least one operation for releasing the first PDU session and the at least one operation for establishing the second PDU session.

8. The electronic device (101) of any one of claims 1 to 7, wherein the instructions, when executed by the at least one processor (120, 212, 214, 260) individually or collectively, cause the electronic device (101) to, as at least part of, based on identifying to release the first PDU session, performing the at least one operation for releasing the first PDU session, and performing, based on the release of the first PDU session, the at least one operation for establishing the second PDU session based on the at least part of the URSP rule,
based on identifying that at least one operation based on the first PDU session is being performed:
suspend performing of the performance of the at least one operation for releasing the first PDU session and the at least one operation for establishing the second PDU session, until the at least one operation based on the first PDU session completes,
based on identifying that the at least one operation based on the first PDU session completes, perform the at least one operation for releasing the first PDU session and the at least one operation for establishing the second PDU session.

9. The electronic device (101) of any one of claims 1 to 8, wherein the instructions, when executed by the at least one processor (120, 212, 214, 260) individually or collectively, cause the electronic device (101) to, as at least part of identifying the occurrence of the event associated with the application of the URSP rule,
identify registration of the electronic device (101) to a network capable of applying the URSP rule which is pre-obtained by the electronic device (101), as the occurrence of the event.

10. The electronic device (101) of any one of claims 1 to 9, wherein the instructions, when executed by the at least one processor (120, 212, 214, 260) individually or collectively, cause the electronic device (101) to, as at least part of identifying the registration of the electronic device to the network capable of applying the URSP rule which is pre-obtained by the electronic device (101), as the occurrence of the event,
according to mobility of the electronic device (101) from another network incapable of applying the URSP rule to the network capable of applying the URSP, perform at least one operation for registering to the network capable of applying the URSP, and
wherein the URSP rule is not applied while the electronic device (101) registers to the other network.

11. The electronic device (101) of any one of claims 1 to 10, wherein the instructions, when executed by the at least one processor (120, 212, 214, 260) individually or collectively, cause the electronic device (101) to, as at least part of identifying the occurrence of the event associated with the application of the URSP rule,
identify reception of the URSP rule from a network, as the occurrence of the event.

12. The electronic device (101) of any one of claims 1 to 11, wherein the instructions, when executed by the at least one processor (120, 212, 214, 260) individually or collectively, cause the electronic device (101) to,
based on identifying occurrence of an event associated with deactivation of the URSP rule:
based on information associated with at least one type defined by a TD of a plurality of pieces of information for the second PDU session not corresponding to the information for establishing PDU session which is pre-stored in the electronic device (101), perform at least one operation for releasing the second PDU session and at least one operation for establishing a PDU session based on the information for establishing PDU session which is pre-stored in the electronic device (101).

13. The electronic device (101) of any one of claims 1 to 12, wherein the instructions, when executed by the at least one processor (120, 212, 214, 260) individually or collectively, cause the electronic device (101) to,
identify reception of a command for deleting the URSP rule from a network, as the occurrence of the event associated with the deactivation of the URSP rule.

14. An operating method of an electronic device (101), comprising:
performing at least one operation for establishing a first protocol data unit, PDU, session, based on information for establishing a PDU session which is pre-stored in the electronic device (101);
identifying occurrence of an event associated with application of a user equipment route selection policy, URSP, rule;
based on identifying the occurrence of the event, identifying whether to maintain or release the first PDU session based on a comparison result between the URSP rule and a plurality of pieces of information for the first PDU session; and
based on identifying to release the first PDU session, performing at least one operation for releasing the first PDU session, and performing, based on the release of the first PDU session, at least one operation for establishing a second PDU session based on at least part of the URSP rule.

15. A storage medium storing computer-readable instructions, wherein the instructions, when executed by at least one processor (120, 212, 214, 260) individually or collectively, cause an electronic device (101) to:
based on information for establishing a protocol data unit, PDU, session which is pre-stored in the electronic device (101), perform at least one operation for establishing a first PDU session,
identify occurrence of an event associated with application of a user equipment route selection policy, URSP, rule,
based on identifying the occurrence of the event, identify whether to maintain or release the first PDU session based on a comparison result between the URSP rule and a plurality of pieces of information for the first PDU session, and
based on identifying to release the first PDU session, perform at least one operation for releasing the first PDU session, and perform, based on the release of the first PDU session, at least one operation for establishing a second PDU session based on at least part of the URSP rule.
